# EUROPÄISCHE PATENTSCHRIFT

(11) **EP 4 126 722 B1**
(45) Veröffentlichungstag und Bekanntmachung des Hinweises auf die Patenterteilung: **30.04.2025**
(21) Anmeldenummer: 21718490.2
(22) Anmeldetag: 30.03.2021
(51) Int. Cl.: B65G 54/02

(54) **TRANSPORTTRÄGER, HÄNGEFÖRDERVORRICHTUNG, ARBEITSSTATION UND VERFAHREN ZUM TRANSPORT VON HÄNGEWARE**
TRANSPORT CARRIER, OVERHEAD CONVEYOR DEVICE, WORKING STATION AND METHOD FOR TRANSPORTING HANGING GOODS
SUPPORT DE TRANSPORT, DISPOSITIF DE CONVOYAGE AÉRIEN, STATION DE TRAVAIL ET PROCÉDÉ DE TRANSPORT DE MARCHANDISES SUSPENDUES

(30) Priorität: 30.03.2020 AT 502542020
(43) Veröffentlichungstag der Anmeldung: 08.02.2023
(73) Patentinhaber: TGW Immobilien Wels GmbH, 4600 Wels (AT)
(72) Erfinder: REISCHL, Josef, 4623 Gunskirchen (AT); LINDORFER, Stefan, 4122 Arnreit (AT)
(74) Vertreter: Burger, Hannes
(86) Internationale Anmeldenummer: PCT/AT2021/060106
(87) Internationale Veröffentlichungsnummer: WO 2021/195682

(56) Entgegenhaltungen:
- EP-A1- 0 422 330
- WO-A1-2020/019009
- DE-A1- 1 963 505
- DE-A1- 102015 226 141
- DE-A1- 102018 209 722
- DE-A1- 102018 209 725
- FR-A1- 2 424 166
- JP-A- 2002 058 233
- JP-A- H 037 003
- JP-A- H 037 004
- JP-A- H04 342 657
- JP-A- S63 188 561

## Beschreibung

Die Erfindung betrifft einen Transportträger zum Transport von Hängeware an einer Hängefördervorrichtung, umfassend einen Basiskörper, welcher einander gegenüberliegende Seitenwände ausbildet, einen Tragkörper, welcher zur Aufnahme der Hängeware ausgebildet ist, eine Vielzahl von Laufrollen und ein Sekundärelement eines Linearmotors, welches mit einem stationären Primärelement des Linearmotors zusammenwirken kann, um eine Antriebskraft auf den Transportträger auszuüben.

Darüber hinaus betrifft die Erfindung eine Hängefördervorrichtung zum hängenden Transport von Hängeware, mit mehreren derartigen Transportträgern, umfassend eine Führungsvorrichtung, entlang welcher die Transportträger in einer Transportrichtung bewegbar sind, und eine Antriebsvorrichtung, welche zumindest ein Primärelement eines Linearantriebs aufweist, welches mit dem Sekundärelement der Transportträger zusammenwirkt, um eine Antriebskraft auf die Transportträger zu übertragen.

Ferner betrifft die Erfindung eine Arbeitsstation zur Bearbeitung von, insbesondere elektronisch erfassten, Aufträgen, umfassend einen Bearbeitungsbereich, eine Hängefördervorrichtung, und zumindest einen entlang der Hängefördervorrichtung mittels eines Linearantriebs bewegbaren Transportträger zum Transport von Hängeware, wobei die Hängefördervorrichtung einen Antransportabschnitt zum Antransport des Transportträgers zum Bearbeitungsbereich, einen an den Antransportabschnitt anschließenden Bereitstellabschnitt zum Bereitstellen des Transportträgers im Bearbeitungsbereich und einen an den Bereitstellabschnitt anschließenden Abtransportabschnitt zum Abtransport des Transportträgers vom Bearbeitungsbereich umfasst.

Des Weiteren betrifft die Erfindung ein Verfahren zum Transport von Hängeware zu oder von einer Arbeitsstation, wobei die Hängeware an einem Transportträger hängend transportiert wird.

Schließlich betrifft die Erfindung ein Verfahren zum Transport von Hängeware an einer Hängefördervorrichtung, bei welchem Transportträger mit einer Antriebskraft beaufschlagt und entlang einer Führungsvorrichtung bewegt werden, wobei die Transportträger jeweils einen Tragkörper umfassen, an welchem die Hängeware hängend transportiert wird.

Allgemein versteht man unter Hängeware eine Ware, die hängend transportiert und/oder gelagert wird. Klassische Beispiele von Hängeware sind Kleidungsstücke, die mittels Kleiderbügel an den Transportträgern hängen, oder Transporttaschen zur Aufnahme von Ware, welche an den Transportträgern hängen. Die Hängeware kann beispielsweise ein Kleidungsstück, welches auf einem Kleiderbügel hängt, oder mehrere Kleidungsstücke, welche auf einem gemeinsamen Kleiderbügel hängen, umfassen. So können beispielsweise bei einem Anzug oder Kostüm zwei Kleidungsstücke, insbesondere ein Sakko oder Blazer und eine Hose, über einen gemeinsamen Kleiderbügel hängend, transportiert werden. Analog dazu kann die Hängeware auch beispielsweise eine Ware bzw. ein Stückgut, welche in einer Transporttasche transportiert wird, oder mehrere Waren bzw. Stückgüter umfassen, welche in einer gemeinsamen Transporttasche transportiert werden, umfassen. Eine derartige Ware kann ein Karton, wie beispielsweise ein Schuhkarton, sein. Hängeware steht im vorliegenden Zusammenhang im Gegensatz zu Liegeware. Bei Liegeware handelt es sich um Ware, die auf sich bewegenden Transportträgern ruhend transportiert wird. Demgegenüber hängt Hängeware unterhalb der Transportträger.

Verschiedene Ausführungen von Transporttaschen sind aus der DE 10 2004 018 569 A1, DE 20 2017 106 993 U1 und WO 2018/130712 A2 bekannt.

Aus dem Stand der Technik sind insbesondere laufrollengeführte Transportträger zum Transport von Hängeware bekannt. Die Transportträger umfassen jeweils einen Basiskörper mit einem Antriebs- und einem Laufrollenabschnitt, in welchem Laufrollen angeordnet sind.

Ein Antrieb der Transportträger erfolgt in der Regel mittels eines endlos umlaufenden beweglichen Antriebsmittels, wie etwa Ketten, Riemen oder dergleichen.

Beispielsweise offenbart die EP 3 181 493 A1 einen Transportträger, welcher mittels einer Antriebskette befördert wird. Eine Mitnahme des Transportträgers erfolgt hierbei durch Formschluss zwischen der Antriebskette und dem Transportträger. Hierfür weist der Transportträger in einem Antriebsabschnitt ein Mitnahmeorgan auf, welches in die Antriebskette eingreift, um den Formschluss herzustellen.

Alternativ ist aus dem Stand der Technik, beispielsweise aus der DE 20 2015 004 440 U1, bekannt, dass die Transportträger über ein endlos umlaufendes bewegliches Antriebsband mittels Reibschluss zwischen dem Transportträger und dem Antriebsband angetrieben werden. Hierfür weist der Transportträger im Antriebsabschnitt eine Reibfläche auf, welche das Antriebsband kontaktiert, um den Reibschluss herzustellen.

Durch die aus dem Stand der Technik bekannten Antriebseinrichtungen kann bei einer Hängefördervorrichtung eine Vielzahl von Transportträgern im Wesentlichen gemeinsam und mit hohen Geschwindigkeiten, in der Regel mit maximal 0,6 m/s, entlang von geradlinigen oder gekrümmten Förderstrecken transportiert werden.

Nachteilig ist bei derartigen Hängefördervorrichtungen jedoch, dass die Antriebseinrichtungen jeweils ein endlos umlaufendes Antriebsmittel aufweisen, für welche Umlenkeinrichtungen mit großen Umlenkradien erforderlich sind. Somit erfordert eine Realisierung solcher Hängefördervorrichtungen einen großen Bauraum.

Üblicherweise umfassen derartige Hängefördervorrichtungen mehrere Antriebssegmente, welche jeweils ein endlos umlaufendes Antriebsmittel aufweisen. Um bei derartigen Hängefördervorrichtungen möglichst wenige Umlenkeinrichtungen installieren zu müssen, können einzelne Antriebssegmente mit großer Länge ausgebildet sein. Dies hat jedoch den Nachteil, dass sämtliche Transportträger, welche gerade zwischen zwei Umlenkeinrichtungen in einem Antriebssegment positioniert sind, mit derselben Transportgeschwindigkeit transportiert werden, was eine Flexibilität einer derartigen Hängefördervorrichtung reduziert.

Ferner kommt es bei der Mitnahme der Transportträger, insbesondere bei der Herstellung des Form- oder Reibschlusses, zu einer hohen Lärmentwicklung sowie zu einem hohen Verschleiß jener Teile, die in Eingriff bzw. miteinander in Kontakt gebracht werden.

Zum Ausschleusen werden die Transportträger an Weichenstellen bzw. an einer Verzweigung der Förderstrecke bzw. in einem Weichenabschnitt von einer Hauptstrecke auf eine Ausschleusstrecke geführt.

Derartige Ausschleusstrecken dienen vornehmlich als Sortierstrecken in einem Sortierabschnitt der Hängefördervorrichtung oder als Puffer- bzw. Staustrecken in einem Pufferabschnitt der Hängefördervorrichtung. Während die Sortierstrecken zwingend jeweils eine Antriebseinrichtung benötigen, um eine Sortierung der Hängeware zu ermöglichen, können Pufferstrecken entweder jeweils eine Antriebseinrichtung umfassen oder ausgehend von der Hauptstrecke nach unten abfallende Pufferstrecken, so genannte Gefällebahnen, aufweisen.

Die Antriebseinrichtung ist derart gestaltet, dass eine Antriebskraft von einem Antriebsmittel wie oben beschrieben auf die Transportträger entweder durch Reib-
oder Formschluss übertragen wird.

Nachteilig ist hierbei, dass die Ausschleusstrecken durch die Anordnung der Antriebseinrichtungen einen hohen Platzbedarf aufweisen, sodass auf einer vergleichsweise gleichen Fläche eine geringe Anzahl an Ausschleusstrecken untergebracht werden kann. Um jedoch eine entsprechende Sortier- oder Pufferleistung zu erreichen, ist eine entsprechend höhere Anzahl an Pufferstrecken erforderlich.

Sind hingegen Ausschleusstrecken ohne zusätzliche Antriebseinrichtungen vorgesehen, beispielsweise als Gefällebahnen ausgebildet, muss die Hauptstrecke relativ zu einem Abgabeende der Gefällebahnen auf höheren Niveau angebracht sein. Dies erschwert sowohl die Montage als auch die Inbetriebnahme der Hängefördervorrichtung und erzeugt große Verluste des nutzbaren Raums.

Die oben beschriebenen Transportträger dienen dem Transport von Hängeware.

Als Alternative sind aus dem Stand der Technik laufrollengeführte Transportträger bekannt, welche zumindest bereichsweise durch einen Linearmotor angetrieben werden.

Die DE 69 45 125 U beschreibt einen Transportträger, welcher über große Strecken mittels einer Antriebskette angetrieben wird. Aus diesem Dokument ist ferner bekannt, dass der Transportträger über eine kurze Strecke, insbesondere in einem Weichenabschnitt, durch einen Linearantrieb angetrieben wird, indem ein stationäres Primärelement mit dem ferromagnetischen Basiskörper des Transportträgers zusammenwirkt.

Aus der DE 10 2015 226 141 A1 und der WO 2015/036302 A1 sind Transportträger zum hängenden Transport von Flaschen und dergleichen bekannt, welche mittels eines Linearantriebs angetrieben werden.

Die CH 592 537 A5 beschreibt einen Transportträger zum Transport von Kleidungsstücken, welcher ebenfalls mittels eines Linearantriebs angetrieben wird.

Nachteilig ist bei derartigen Transportträgern, dass eine Antriebsleistung des Linearantriebs von einem Abstand zwischen einem stationären Primärelement und einem am Transportträger angeordneten Sekundärelement und dadurch von einem Schwingverhalten der Hängeware abhängig ist.

Dieser Effekt hält sich für kurze Hängeware, insbesondere für Hängeware mit einem Schwerpunkt in der Nähe des Transportträgers, wie beispielsweise Flaschen oder dergleichen, in Grenzen. Ein Transport von längerer Hängeware, beispielsweise von Hängeware, die sich über zumindest 50 cm unterhalb des Transportträgers erstreckt, kann sich das Schwingverhalten negativ auf die Antriebsleistung des Linearantriebs auswirken. Dies ist vor allem bei Kleidungsstücken, insbesondere bei Kleidern oder Mänteln, oder bei Waren, welche in Transporttaschen transportiert werden, der Fall. Besonders bei Waren, die in Transporttaschen transportiert werden, ist der Schwerpunkt üblicherweise am unteren Ende der Transporttasche und damit weit vom Transportträger entfernt, was sich besonders negativ auf das Schwingverhalten auswirkt.

Die CH 592 537 A5 widmet sich diesem Problem, indem im Wesentlichen zwei Transportträger zu einer Transporteinheit gekoppelt werden und sich das Sekundärelement zwischen diesen erstreckt. Dadurch ergibt sich jedoch eine im Vergleich zum einzelnen Transportträger verlängerte Längserstreckung der jeweiligen Transporteinheiten, wodurch sich auch ein minimaler Kurvenradius vergrößert, der mit derartigen Transporteinheiten gefahren werden kann. Dies führt letztlich auch zu einem vergrößerten Platzbedarf derartiger Hängefördervorrichtungen.

Die JPH 04342657 A offenbart einen Transportträger gemäß dem Oberbegriff des Anspruchs 1.

Aufgabe der Erfindung ist es, einen verbesserten Transportträger der eingangs genannten Art anzugeben.

Überdies ist es Aufgabe der Erfindung, eine verbesserte Hängefördervorrichtung sowie eine Arbeitsstation zur Bearbeitung von Aufträgen mit einer Hängefördervorrichtung anzugeben. Insbesondere soll eine platzsparende Anordnung der Hängefördervorrichtung bei umfassender Funktionalität hinsichtlich einer Sortierung und/oder Pufferung möglich sein. Besonders bevorzugt soll ein geräuscharmer Betrieb der Hängefördervorrichtung ermöglicht werden.

Ferner ist es Aufgabe der Erfindung ein Verfahren zum Transport von Hängewaren an einer Hängefördervorrichtung sowie ein Verfahren zum Transport von Hängeware zu oder von einer Arbeitsstation mit einem verbesserten Antrieb anzugeben.

Der Transportträger der Erfindung ist gemäß den Merkmalen des Anspruchs 1 ausgebildet.

Somit kann der Transportträger an der Hängefördervorrichtung derart positioniert werden, dass das Primärelement vom Basiskörper umgriffen ist. Ein dadurch erzielter Vorteil ist insbesondere darin zu sehen, dass der Basiskörper nicht einseitig vom Primärelement abgelenkt bzw. abgestoßen wird.

Günstig ist es hierbei weiter, dass die Laufrollen beidseitig zum Primärelement angeordnet sind, wodurch sich eine seitliche Stützung des Transportträgers ergibt.

Mit Vorteil weist der Basiskörper einen offenen Profilquerschnitt auf, wobei ein dem Basisende gegenüberliegendes Ende der Seitenwände ein freies Ende ist. Besonders bevorzugt ist der Basiskörper hierfür U-förmig ausgebildet. Dadurch kann das Primärelement in einfacher Art und Weise durch eine offene Seite des Profilquerschnitts in den Transportträgerinnenraum eingeführt werden.

Um eine Antriebskraft zu erhöhen ist bevorzugt vorgesehen, dass das Sekundärelement einen Magneten, insbesondere einen Permanentmagneten, umfasst.

Das Sekundärelement des Linearmotors ist zur Aufnahme einer, insbesondere magnetischen, Antriebskraft ausgebildet. Somit kann das Sekundärelement mit Primärelementen des Linearmotors zusammenwirken, um so einen insbesondere magnetischen Antrieb zu erzeugen und den Transportträger in eine Bewegungsrichtung entlang einer Führungsvorrichtung anzutreiben oder zu bewegen. Hierfür ist das Sekundärelement bevorzugt zur Bereitstellung eines konstanten Magnetfeldes eingerichtet. Ferner kann vorgesehen sein, dass mit dem Primärelement ein Magnetfeld erzeugt wird, welches so eingerichtet ist, dass das Magnetfeld des Primärelementes und das konstante Magnetfeld des Sekundärelementes so kombiniert sind, dass der Transportträger in Bewegungsrichtung bewegt wird. Dadurch wird eine berührungslose Kraftübertragung realisiert, welche einerseits ein nahezu verschleiß- und wartungsfreies Antriebssystem und andererseits einen besonders geräuscharmen Transport von Hängeware ermöglicht.

Bevorzugt ist vorgesehen, dass das Sekundärelement als Magnet, vorzugsweise als Permanentmagnet, ausgebildet ist. Dadurch ist gewährleistet, dass das Sekundärelement ein konstantes Magnetfeld zur Kopplung mit dem Primärelement bereitstellt. Da eine Nutzlast in der Regel maximal 5 kg, insbesondere maximal 3 kg, aufweist und eine Fördergeschwindigkeit üblicherweise mit maximal 0,6 m/s beschränkt ist, ist eine verhältnismäßig geringe Antriebskraft erforderlich. Somit können zu einem geringen Preis erhältliche Permanentmagneten eingesetzt werden, wodurch die Kosten für die Herstellung des Transportträgers deutlich reduziert werden.

Vorzugsweise umfasst der Transportträger eine erste Laufrolle und eine zweite Laufrolle, welche an den gegenüberliegenden Seitenwänden angeordnet sind. Die erste Laufrolle und die zweite Laufrolle können ein erstes Laufrollenpaar mit einer gemeinsamen Drehachse bilden. Optional kann der Transportträger weitere Laufrollen aufweisen, welche in der beschriebenen Weise paarweise weitere Laufrollenpaare mit gemeinsamen Drehachsen ausbilden. Diese Anordnung ist besonders bevorzugt, wenn der Transportträger eine geradzahlige Anzahl von Laufrollen, insbesondere zwei, vier oder sechs Laufrollen, aufweist.

Alternativ können die Laufrollen jeweils eine Drehachse aufweisen, welche insbesondere nicht in einer Linie, sondern parallel zueinander liegen. Diese Anordnung ist besonders bevorzugt, wenn der Transportträger eine ungeradzahlige Anzahl von Laufrollen, insbesondere drei, fünf oder sieben Laufrollen, aufweist.

Mit Vorteil ist der Tragkörper mit dem Basiskörper unlösbar oder lösbar verbunden. Dadurch kann der Tragkörper aus einem anderen Material als der Basiskörper ausgebildet sein. Alternativ kann der Tragkörper einteilig mit dem Basiskörper ausgebildet sein. Eine einteilige Variante hat den Vorteil, dass der Basiskörper mit dem Tragkörper in einem gemeinsamen Produktionsschritt hergestellt werden kann.

Insbesondere kann der Tragkörper über eine Verbindungsvorrichtung auswechselbar am Basiskörper befestigt sein. Dadurch werden ein flexibler Einsatz des Transportträgers und insbesondere ein einfaches Anpassen an verschiedene Anforderungen ermöglicht.

Hierfür kann der Basiskörper an einem ersten Ende des Basiskörpers einen Tragkörperanbindungsabschnitt aufweisen. Der Tragkörper kann ferner einen zum Tragkörperanbindungsabschnitt des Basiskörpers korrespondierenden Basiskörperanbindungsabschnitt aufweisen.

Überdies umfasst die Verbindungsvorrichtung bevorzugt
- in einem der Basis- und Tragkörperanbindungsabschnitte eine senkrecht zur Längsachse verlaufende Profilnut und in einem der Basis- und Tragkörperanbindungsabschnitte einen senkrecht zur Längsachse verlaufenden Profilfortsatz,
- wobei die Profilnut eine Hinterschneidung und in Richtung ihrer Längserstreckung endseitig eine Einschuböffnung ausbildet,
- wobei der Profilfortsatz einen Profilsteg und einen am Profilsteg querschnittserweiternd angeformten Profilkopf umfasst,
- wobei der Profilfortsatz über die Einschuböffnung in einer senkrecht zur Längsachse ausgerichteten Einschubrichtung in die Profilnut einschiebbar ist.

Vorteilhaft ist es, wenn der Tragkörper eine Einhängeeinrichtung zur Aufnahme der Hängeware aufweist. Die Einhängeeinrichtung ist hierbei vorzugsweise als Hakenaufnahme zur Aufnahme eines Hakens, insbesondere des Hakens eines Kleiderbügels oder einer Transporttasche, ausgebildet. Hierfür kann die Hakenaufnahme beispielsweise als Haken oder als Öse bzw. durchgängiges Loch im Tragkörper ausgebildet sein. Der Tragkörper bildet vorzugsweise zwei einander gegenüberliegende Seitenwände aus, welche parallel zu den Seitenwänden des Basiskörpers ausgerichtet sind. Die Einhängeeinrichtung umfasst bevorzugt eine Ausnehmung, welche sich mit einer Längsachse zwischen den Seitenwänden erstreckt, sodass die Hängeware im Wesentlichen orthogonal zur Bewegungsrichtung hängend transportiert werden kann. Alternativ kann vorgesehen sein, dass die Seitenwände des Tragkörpers orthogonal zu den Seitenwänden des Basiskörpers ausgerichtet sind, um das Verbindungselement an einem ersten Ende des Verbindungselementes in der Einhängeeinrichtung eines ersten Transportträgers und an einem zweiten Ende des Verbindungselementes in der Einhängeeinrichtung eines zweiten Transportträgers aufzunehmen und ein Transportträgersystem bereitzustellen.

Mit Vorteil ist der Transportträger zum Transport von Hängeware, wie Kleidungsstücke, die mittels Kleiderbügel an den Transportträgern hängen, oder Transporttaschen zur Aufnahme von Waren, welche an den Transportträgern hängen, ausgebildet.

Darüber hinaus können Transportträger über ein Verbindungselement zu einem Transportträgersystem verbunden sein, beispielsweise durch eine Verbindungsstange. Die Verbindungsstange verläuft parallel zu einer Längserstreckung der Führungsvorrichtung. Beispielsweise sind ein erster Transportträger und ein zweiter Transportträger über eine Verbindungsstange miteinander zum Transportträgersystem verbunden. Die Hängeware kann hierbei über die Verbindungsstange hängend transportiert werden.

Vorzugsweise wird jeweils eine Hängeware mit jeweils einem Transportträger transportiert. Hierfür kann jeweils eine Transporttasche in jeweils einen Transportträger eingehängt sein. Die Transporttaschen sind üblicherweise für eine maximale Nutzlast von maximal 5 kg, besonders bevorzugt von maximal 3 kg, ausgebildet. Insbesondere sind die Transporttaschen zur Aufnahme eines Stücks einer Ware ausgebildet.

Günstig ist es, wenn der Transportträger eine Seitenführungsvorrichtung umfasst, welche mit einer Seitenführung des Führungsprofils der Hängefördervorrichtung zusammenwirken kann, um den Transportträger zu führen. Dadurch kann der Transportträger entlang des Führungsprofils geführt werden, wodurch der Transportträger relativ zum Primärelement ausgerichtet wird. Die Seitenführungsvorrichtung ist vorzugsweise dazu eingerichtet, den Transportträger orthogonal zur Transportrichtung zu zentrieren.

Durch ein Zusammenwirken der Seitenführungsvorrichtung mit der Seitenführung des Führungsprofils kann eine Bewegung des Transportträgers quer zur Transportrichtung begrenzt und somit der Transportträger in Transportrichtung geführt werden. Die Seitenführungsvorrichtung kann ein Stützelement und/oder eine Stützrolle umfassen.

Vorteilhaft ist es, wenn die Seitenführungsvorrichtung ein oberes Stützelement umfasst und das obere Stützelement einen ersten oberen Stützkörper, welcher an einem dem Basisende gegenüberliegenden Ende der ersten Seitenwand der Seitenwände angeordnet ist und gegebenenfalls einen zweiten oberen Stützkörper aufweist, welcher an einem dem Basisende gegenüberliegenden Ende der zweiten Seitenwand der Seitenwände angeordnet sind. Bevorzugt ist das obere Stützelement hierbei dazu eingerichtet, eine Auslenkbewegung des Transportträgers zu begrenzen.

Der erste und/oder der zweite Stützkörper ist hierbei günstigerweise als Gleitelement ausgebildet, welches jeweils auf das (freie) Ende der entsprechenden Seitenwand aufgesteckt und/oder an diesem befestigt ist. Das Stützelement kann hierbei so angeordnet sein, dass dieses in einer Führungsrille oder Führungsnut eines Führungsprofils der Hängefördervorrichtung geführt wird, wie weiter unten genauer beschrieben ist.

Der Stützkörper kann eine Stützfläche ausbilden, welche mit einer Stützfläche der Führungsrille oder Führungsnut zusammenwirken kann, um die Auslenkbewegung des Transportträgers zu begrenzen und diesen entlang des Führungsprofils der Hängefördervorrichtung zu führen.

Alternativ kann der erste und/oder der zweite Stützkörper als Rollelement bzw. Stützrolle ausgebildet sein, welches am (freien) Ende der entsprechenden Seitenwand drehbar gelagert ist.

Weiterhin kann es günstig sein, wenn die Seitenführungsvorrichtung ein unteres Stützelement umfasst und das untere Stützelement einen ersten unteren Stützkörper und einen zweiten unteren Stützkörper aufweist, wobei das untere Stützelement außenseitig an den Seitenwänden des Basiskörpers angeordnet und von den Laufrollen beabstandet ist, sodass jeweils eine Laufschiene des Führungsprofils der Hängefördervorrichtung zwischen einer Laufrolle der Laufrollen und einem Stützkörper der Stützelemente anordenbar ist. Somit kann die Laufschiene zwischen den Laufrollen und den Stützelementen angeordnet werden, wodurch ein ständiges aufliegen der Laufrollen auf der Laufschiene gewährleistet und somit eine erhöhte Laufruhe erreicht werden kann.

Der Stützkörper weist eine Stützfläche auf, welche zumindest temporär mit einer Unterseite der Laufschiene in Berührung kommt, wenn der Transportträger entlang der Laufschiene bewegt wird. Hierbei ist es günstig, dass ein Minimalabstand zwischen der Stützfläche des Stützkörpers und einer Umfangsfläche der Laufrollen einer Dicke der Laufschiene entspricht.

Die Stützkörper sind vorzugsweise als Gleitelemente oder als Stützrollen ausgebildet, wobei die Stützfläche durch eine Gleitfläche der Gleitelemente oder eine Umfangsfläche der Stützrollen ausgebildet ist.

Besonders bevorzugt ist es, wenn das Stützelement ein erstes Stützkörperpaar und ein zumindest ein weiteres Stützkörperpaar umfasst, wobei die Stützkörperpaare jeweils einen ersten Stützkörper und einen zweiten Stützkörper aufweisen.

Bei Stützkörpern in Form von Stützrollen kann es zweckmäßig sein, wenn die Stützkörper paarweise angeordnet sind und der erste Stützkörper und der zweite Stützkörper eine gemeinsame Drehachse aufweisen.

Vorteilhaft ist es, wenn die Seitenführungsvorrichtung zumindest ein Seitenführungselement aufweist, wobei zumindest eine der Laufrollen und/oder zumindest einer der Stützkörper des unteren Stützelementes und/oder zumindest einer der Stützkörper des oberen Stützelementes das Seitenführungselement aufweist.

Hierbei kann ein Seitenführungselement vorgesehen sein, welches an einer der Laufrollen, an einem der Stützkörper des unteren Stützelementes oder an einem der Stützkörper des oberen Stützelementes angeordnet ist.

Sind mehrere Seitenführungselemente vorgesehen, kann zumindest eine der Laufrollen und/oder zumindest einer der Stützkörper des unteren Stützelementes und/oder zumindest einer der Stützkörper des oberen Stützelementes jeweils eines der Seitenführungselemente aufweisen.

Mit Vorteil ist das zumindest eine Seitenführungselement entlang einer Umfangsfläche der Laufrollen und/oder entlang der Stützfläche der Stützkörper oder des Stützkörpers ausgebildet. Das zumindest eine Seitenführungselement ist bevorzugt so ausgebildet, dass dieses mit der Seitenführung der Hängefördervorrichtung zusammenwirken kann, um den Transportträger zu führen.

Günstig ist es, wenn eine der Laufrollen oder die Laufrollen jeweils ein Seitenführungselement aufweisen, welches entlang der Umfangsfläche der Laufrollen angeordnet bzw. ausgebildet ist.

Das Seitenführungselement ist beispielsweise als Führungsnut ausgebildet, in welche die Seitenführung der Hängefördervorrichtung eingreifen kann. Die Seitenführung der Hängefördervorrichtung ist hierfür vorzugsweise als zur Führungsnut korrespondierender Führungsvorsprung ausgebildet.

Alternativ ist das Seitenführungselement als Führungsvorsprung ausgebildet, welcher in die Seitenführung der Hängefördervorrichtung eingreifen kann. Die Seitenführung der Hängefördervorrichtung ist hierfür vorzugsweise als zum Führungsvorsprung korrespondierende Führungsnut ausgebildet.

Alternativ oder zusätzlich ist das Seitenführungselement in gleicher Art und Weise an den unteren Stützelementen ausgebildet, beispielsweise an der Gleitfläche der Gleitelemente oder der Umfangsfläche der Stützrollen.

Es erweist sich als günstig, wenn der Basiskörper einen Antriebsabschnitt aufweist, in welchem das Sekundärelement angeordnet ist, und einen vom Antriebsabschnitt beabstandeten Stützabschnitt aufweist, in welchem das obere Stützelement angeordnet ist, sodass jeweils ein Spaltabstand zwischen dem Sekundärelement und einem mit diesem zusammenwirkenden Primärelement im Wesentlichen konstant haltbar ist.

"Im Wesentlichen" bedeutet in diesem Zusammenhang, dass eine Führungsgenauigkeit des Transportträgers den Spaltabstand zwischen dem Sekundärelement und dem Primärelement des Linearmotors beeinflusst. Mit zunehmender Führungsgenauigkeit kann der Spaltabstand exakter eingehalten werden. Hierbei kann ein Toleranzintervall für eine maximale Auslenkbewegung vorgesehen sein, innerhalb welcher die Kraftübertragung bzw. eine Kopplung der Magnetfelder des Primärelementes und des Sekundärelementes ausreichend ist, um den Transportträger anzutreiben.

Ferner ist es günstig, wenn das Sekundärelement ein erstes seitliches Sekundärelement aufweist, welches (im Transportträgerinnenraum) an einer ersten Seitenwand der Seitenwände angeordnet ist, und gegebenenfalls ein zweites seitliches Sekundärelement aufweist, welches (im Transportträgerinnenraum) an einer zweiten Seitenwand der Seitenwände angeordnet ist.

Durch die Anordnung des Sekundärelementes an zumindest einer der Seitenwände ist eine gleichmäßige Kraftübertragung vom Primärelement auf das Sekundärelement gewährleistet. Besonders bevorzugt ist eine Anordnung des Sekundärelementes an beiden Seitenwänden. Dadurch wird eine Interaktionsfläche zwischen dem Sekundärelement und dem Primärelement vergrößert, wodurch die Antriebskraft, welche auf den Transportträger ausgeübt wird, erhöht wird. Darüber hinaus ergibt sich durch eine beidseitige magnetische Wechselwirkung zwischen den Sekundärelementen und dem Primärelement eine automatische Ausrichtung des Transportträgers, wodurch ein Spaltabstand zwischen den Sekundärelementen und einem mit diesen zusammenwirkenden Primärelement im Wesentlichen konstant gehalten werden kann. Bevorzugt ist das Sekundärelement innenseitig an den Seitenwänden positioniert.

Es kann vorteilhaft sein, wenn das Sekundärelement ein zentrales Sekundärelement umfasst, welches an der Basis angeordnet ist. Somit kann das Sekundärelement mittig zwischen einer ersten Führungsebene und einer zweiten Führungsebene positioniert sein, wodurch eine gleichmäßige Antriebskraft erreicht werden kann.

Besonders günstig ist es, wenn das zentrale Sekundärelement zusätzlich zum ersten und gegebenenfalls zweiten seitlichen Sekundärelement vorgesehen ist. Dadurch kann die Antriebskraft zusätzlich verstärkt werden.

Vorzugsweise ist vorgesehen, dass der Basiskörper ein ferromagnetisches Material umfasst. Somit kann ein magnetischer Rückschluss für die Sekundärelemente bereitgestellt sein. Vorzugsweise umfassen die Seitenwände und/oder die Basis ein ferromagnetisches Material, beispielsweise Eisen oder Stahl. Darüber hinaus kann dadurch eine magnetische Mitnahme des Transportträgers in einem Weichenbereich realisiert werden, indem beispielsweise ein magnetischer Mitnehmer am Basiskörper mittels magnetischer Wechselwirkung andockt und diesen über eine bestimmte Strecke mitnimmt.

Um ein Gewicht des Transportträgers zu reduzieren, kann vorgesehen sein, dass der Tragkörper zumindest teilweise aus einem Leichtbaumaterial gefertigt ist.

Damit der Transportträger eindeutig identifiziert und beispielsweise einer bestimmten Hängeware zugeordnet werden kann, ist es günstig, wenn ein Identifikationsmittel, insbesondere ein RFID-Chip, am Tragkörper angeordnet ist. Durch eine Anordnung des Identifikationsmittels am Tragkörper ist ferner ein ausreichender Abstand zum Sekundär- und Primärelement gewährleistet, wodurch auch ein Einsatz eines RFID-Chips ermöglicht wird.

Die Hängefördervorrichtung der Erfindung ist gemäß den Merkmalen des Anspruchs 7 ausgebildet.

Ein mit der erfindungsgemäßen Hängefördervorrichtung erzielter Vorteil ist somit insbesondere darin zu sehen, dass eine kontaktfreie Übertragung der Antriebskraft von dem stationären Antriebsmittel auf das bewegliche Antriebsmittel am Transportträger ermöglicht wird. Dadurch kann die Hängefördervorrichtung geräuscharm und im Wesentlichen verschleißfrei betrieben werden.

Ferner ist ein mit der Hängefördervorrichtung erzielter Vorteil darin zu sehen, dass eine Antriebsvorrichtung bereitgestellt wird, welche auf geringem Bauraum realisiert werden kann. Das stationäre Primärelement kann in jedem Streckenabschnitt der Hängefördervorrichtung, insbesondere entlang einer Hauptstrecke, entlang eines Weichenabschnitts und/oder entlang einer Ausschleusstrecke nahe der und/oder an der Führungsvorrichtung und/oder innerhalb des Führungsprofils platzsparend angeordnet sein. Mit anderen Worten, bilden die Streckenabschnitte Antriebssegmente aus. Darüber hinaus sind keine Umlenkschleifen und dergleichen für einen Ketten-, Riemen- oder Bandantrieb erforderlich, wodurch eine Baugröße der Hängefördervorrichtung bzw. der hierfür erforderliche Bauraum wesentlich reduziert wird. Es kann gegenüber den aus dem Stand der Technik bekannten Hängefördervorrichtungen auch eine höhere Anzahl an Ausschleusstrecken auf gleichem Bauraum angeordnet sein, wodurch die Sortierleistung und/oder die Pufferleistung bzw. Stauleistung erhöht wird.

Bevorzugt ist vorgesehen, dass das Primärelement an der Basis befestigt ist. Günstig ist es weiter, wenn das Primärelement parallel zum Führungsprofil verläuft.

Die Schenkel können an deren Innenfläche jeweils einen Vorsprung aufweisen, welche entlang dem Führungsprofil verlaufen und um die Laufschienen bereitzustellen. Alternativ können die Laufschienen innenseitig an den Schenkeln befestigt sein.

Günstig ist es, wenn das Führungsprofil einen nach unten offenen Profilquerschnitt aufweist und die Laufrollen des Transportträgers im Profilinnenraum geführt sind, wobei der Basiskörper aus dem Führungsprofil ragt, sodass der Tragkörper außerhalb des Führungsprofils angeordnet ist. Das Führungsprofil kann insbesondere U-förmig, C-förmig, V-förmig oder dergleichen ausgebildet sein.

Vorteilhaft ist es, wenn das Führungsprofil eine Seitenführung umfasst, welche mit einer Seitenführungsvorrichtung der Transportträger zusammenwirkt.

Wie bereits zuvor zum Transportträger beschrieben, kann durch ein Zusammenwirken der Seitenführungsvorrichtung des Transportträgers mit der Seitenführung des Führungsprofils eine Bewegung des Transportträgers quer zur Transportrichtung begrenzt und somit der Transportträger in Transportrichtung geführt werden.

Mit Vorteil ist vorgesehen, dass die Seitenführung in Längsrichtung des Führungsprofils ein oberes Führungselement umfasst, welches mit dem oberen Stützelement der Transportträger zusammenwirkt, um die Transportträger zu führen.

Das obere Führungselement umfasst vorzugsweise zwei zueinander beabstandete und parallel verlaufende Führungsnuten, welche dazu eingerichtet sind, die oberen Stützelemente aufzunehmen. Die Führungsnuten sind hierfür so dimensioniert, dass die oberen Stützelemente des Transportträgers darin geführt werden.

Vorzugsweise ist vorgesehen, dass die Seitenführung in Längsrichtung des Führungsprofils ein unteres Führungselement umfasst, welches mit dem unteren Stützelement der Transportträger zusammenwirkt, um die Transportträger zu führen.

Günstig ist es, wenn das Primärelement orthogonal von der Basis vorragt. Dadurch ergibt sich eine platzsparende Anordnung des Primärelementes, wobei sich eine Interaktionsfläche zwischen dem Primärelement und dem Sekundärelement im Wesentlichen parallel zu den Seitenwänden des Transportträgers erstreckt. Bevorzugt ragt das Primärelement über ein freies Ende der Schenkel des Führungsprofils aus dem Profilinnenraum hinaus.

Vorteilhaft ist es, wenn der Basiskörper des Transportträgers so angeordnet ist, dass dieser das Primärelement umgreift. Bevorzugt weist der Basiskörper des Transportträgers einen einseitig offenen Profilquerschnitt auf, wobei eine offene Seite des Profilquerschnitts nach oben ausgerichtet ist, sodass der Basiskörper das Primärelement umgreift. Im Wesentlichen sind Basiskörper und Führungsprofil hierbei ineinandergreifend angeordnet.

Mit Vorteil ist vorgesehen, dass die Hängefördervorrichtung eine Steuereinheit zum Ansteuern des zumindest einen Primärelementes umfasst. Somit kann eine Geschwindigkeit, mit welcher die Transportträger bewegt werden, variabel eingestellt werden.

Vorzugsweise ist vorgesehen, dass die Hängefördervorrichtung in Transportrichtung mehrere Antriebssegmente umfasst, welche durch die Steuereinheit individuell ansteuerbar sind. Vorzugsweise weist die Hängefördervorrichtung eine Vielzahl von Primärelementen auf, welche in Gruppen zusammengefasst werden können. Eine Gruppe von Primärelementen kann beispielsweise ein Antriebssegment bilden. Dadurch kann die Hängefördervorrichtung entlang der Führungsvorrichtung in eine Vielzahl von Antriebssegmente unterteilt werden, in welchen die Transportträger jeweils mit unterschiedlichen Geschwindigkeiten bewegt werden können. So kann beispielsweise vorgesehen sein, dass die Transportträger im Bereich einer Arbeitsstation oder im Bereich von Staustrecken mit verringerter Geschwindigkeit bewegt werden und im Bereich von Transportstrecken mit erhöhter Geschwindigkeit. Je kürzer die Antriebssegmente ausgebildet sind und je mehr Antriebssegmente vorgesehen sind, desto höher ist die Flexibilität der Hängefördervorrichtung hinsichtlich einer Geschwindigkeitssteuerung. Ein Vorteil ist hierbei insbesondere darin zu sehen, dass eine höhere Anzahl von Antriebssegmenten keinen höheren Platzbedarf der Hängefördervorrichtung bedeutet.

Günstig ist es, wenn die Antriebssegmente jeweils über ein Anschaltmodul mit der Steuereinheit verbunden sind. Dadurch können eine Vielzahl von Antriebssegmenten oder alle Antriebssegmente einer Hängefördervorrichtung durch eine gemeinsame Steuereinheit angesteuert werden. Über die Anschaltmodule können einzelne Antriebssegmente beispielsweise angeschaltet, abgeschaltet und/oder mit geringerer Antriebskraft für geringe Geschwindigkeiten oder mit hoher Antriebskraft für hohe Geschwindigkeiten betrieben werden.

Es kann ferner vorgesehen sein, dass die Hängefördervorrichtung eine Vielzahl von Sensoren umfasst, welche entlang des Führungsprofils angeordnet und dazu eingerichtet sind, eine Anwesenheit eines Transportträgers zu erfassen. Hierbei kann vorgesehen sein, dass ein Antriebssegment abgeschaltet wird, wenn kein Transportträger im Bereich des Antriebssegments vorhanden ist. Die Sensoren sind hierfür vorzugsweise mit der (elektronischen) Steuereinheit verbunden. Günstig ist es, wenn in jedem Antriebssegment zumindest ein Sensor angeordnet bzw. jedem Antriebssegment ein Sensor zugeordnet ist.

Die Sensoren können beispielsweise als optische Sensoren, als Hall-Sensoren, als Näherungssensoren oder dergleichen ausgebildet sein.

Ferner kann beispielsweise ein Antriebssegment "n" vorausschauend aktiviert werden, wenn ein Transportträger im vorangehenden Antriebssegment "n-1" oder "n-2" detektiert wird. Somit kann eine bedarfsorientierte Aktivierung der Antriebssegmente verwirklicht werden, wodurch ein Energieverbrauch der Hängefördervorrichtung reduziert wird.

Darüber hinaus ist es vorteilhaft, wenn die Hängefördervorrichtung zumindest eine Leseeinheit aufweist, welche dazu ausgebildet ist, die Identifikationsmittel der Transportträger zu erfassen. Die zumindest eine Leseeinheit kann insbesondere als Strich- oder QR-Code-Leseeinheit bzw. als RFID-Leseeinheit ausgebildet sein.

Die Arbeitsstation der Erfindung ist gemäß den Merkmalen des Anspruchs 14 ausgebildet.

Aufträge können hierbei beispielweise einen Umladeauftrag, bei dem eine am Transportträger hängende Transporttasche mit einer oder mehreren Waren beladen wird, und/oder einen Kommissionierauftrag, bei dem eine oder mehreren Waren von einer am Transportträger hängende Transporttasche entladen werden, umfassen. Es versteht sich, dass die Hängeware auch direkt und ohne Transporttasche vom Transportträger transportiert werden kann. In diesem Fall wird beispielsweise zu einem Umladeauftrag eine Ware über einen Kleiderbügel am Transportträger eingehängt und/oder zu einem Kommissionierauftrag eine Ware über einen Kleiderbügel vom Transportträger ausgehängt. Mit anderen Worten können solche Aufträge Bearbeitungsaufträge bilden. Die Aufträge werden an einem elektronischen Auftragsverwaltungssystem datentechnisch erfasst bzw. bearbeitet.

Um Aufträge, insbesondere Bearbeitungsaufträge, an einer Hängeware, beispielweise an einer Transporttasche durchführen zu können, ist es häufig erforderlich, eine Geschwindigkeit des Transportträgers im Vergleich zu einer Transportgeschwindigkeit zu reduzieren oder den Transportträger zu stoppen. Derartige Aufträge können beispielsweise das Beladen oder Entladen von Waren in oder aus Transporttaschen umfassen. Dies erfolgt in der Regel bei einer reduzierten Geschwindigkeit der Transporttaschen oder bei Stillstand der Transporttaschen.

Ein mit der Arbeitsstation erzielter Vorteil ist insbesondere darin zu sehen, dass die Transportträger im Antransportabschnitt abgebremst und im Bereitstellabschnitt für die Bearbeitung bereitgestellt werden können. Das Bereitstellen kann vorzugsweise bei einer Bearbeitungsgeschwindigkeit erfolgen. Ferner kann der Transportträger anschließend an den Bereitstellabschnitt bzw. an die Bearbeitung im Abtransportabschnitt wieder auf eine Transportgeschwindigkeit beschleunigt werden. Die erste Transportgeschwindigkeit und die zweite Transportgeschwindigkeit können gleich oder voneinander verschieden sein.

Es kann sich von Vorteil erweisen, wenn die Bearbeitungsgeschwindigkeit geringer ist als die erste und/oder zweite Transportgeschwindigkeit. Dadurch kann ein Bearbeitungsvorgang im Bearbeitungsbereich zuverlässig durchführt werden. Die Bearbeitungsgeschwindigkeit kann sogar soweit reduziert werden, dass der Transportträger entlang dem Bearbeitungsbereich kurzzeitig angehalten wird. In einer Halteposition kann der Bearbeitungsvorgang erfolgen, beispielweise ein Entladen einer Transporttasche oder ein Beladen einer Transporttasche.

Günstig ist es, wenn im Bereitstellabschnitt eine Stoppeinheit angeordnet ist, welche dazu eingerichtet ist, den Transportträger im Bearbeitungsbereich anzuhalten, wobei das erste Antriebssegment dazu eingerichtet ist, den Transportträger bis zur Stoppeinheit zu transportieren, und wobei das zweite Antriebssegment dazu eingerichtet ist, den Transportträger von der Stoppeinheit weg zu transportieren.

Hierbei kann vorgesehen sein, dass der Transportträger im Antransportabschnitt auf eine reduzierte Bearbeitungsgeschwindigkeit abgebremst wird. Die Stoppeinheit kann einerseits an das erste Antriebssegment und andererseits an das zweite Antriebssegment anschließen.

Optional kann die Stoppeinheit ein drittes Antriebssegment umfassen, welches mit einem dritten Anschaltmodul verbunden und individuell ansteuerbar ist. Das zweite Antriebssegment kann hierbei an das dritte Antriebssegment anschließend angeordnet sein. Das dritte Antriebssegment ist vorzugsweise an das erste Antriebssegment anschließend angeordnet. Das dritte Anschaltmodul ist vorzugsweise dazu eingerichtet, das dritte Antriebssegment anzusteuern, um den Transportträger gemäß einem Geschwindigkeitsprofil im Bearbeitungsbereich zu bewegen.

In einer ersten Variante umfasst das Geschwindigkeitsprofil
- ein Abbremsen des Transportträgers von der ersten Transportgeschwindigkeit auf die Bearbeitungsgeschwindigkeit, insbesondere bis zu einem Stillstand des Transportträgers an einem vorbestimmten Haltepunkt,
- ein Beschleunigen des Transportträgers von der Bearbeitungsgeschwindigkeit, insbesondere vom Stillstand des Transportträgers, auf die zweite Transportgeschwindigkeit.

In einer zweiten Variante umfasst das Geschwindigkeitsprofil
- ein Abbremsen des Transportträgers von der Bearbeitungsgeschwindigkeit auf eine reduzierte Bearbeitungsgeschwindigkeit, insbesondere bis zum Stillstand des Transportträgers an einem vorbestimmten Haltepunkt,
- ein Beschleunigen des Transportträgers von der reduzierten Bearbeitungsgeschwindigkeit, insbesondere vom Stillstand des Transportträgers, auf die Bearbeitungsgeschwindigkeit oder auf die zweite Transportgeschwindigkeit.

Die Bearbeitungsgeschwindigkeit ist hierbei gleich oder geringer als die erste und die zweite Transportgeschwindigkeit. Die reduzierte Bearbeitungsgeschwindigkeit ist gleich oder geringer als die Bearbeitungsgeschwindigkeit. Ferner kann die Bearbeitungsgeschwindigkeit und/oder die reduzierte Bearbeitungsgeschwindigkeit einem Stillstand des Transportträgers entsprechen.

Das dritte Anschaltmodul ist vorzugsweise dazu ausgebildet den Transportträger wahlweise gemäß dem Geschwindigkeitsprofil nach der ersten Variante oder gemäß dem Geschwindigkeitsprofil nach der zweiten Variante im Bearbeitungsbereich zu bewegen, abhängig davon, mit welcher Geschwindigkeit (Transportgeschwindigkeit oder Bearbeitungsgeschwindigkeit) der Transportträger vom dritten Antriebssegment übernommen wird.

Vorteilhaft ist es, wenn zwischen dem ersten Antriebssegment und dem zweiten Antriebssegment ein drittes Antriebssegment vorgesehen und dieses im Bereitstellabschnitt angeordnet ist, welches mit einem dritten Anschaltmodul verbunden und individuell ansteuerbar ist, wobei das dritte Anschaltmodul dazu eingerichtet ist, das dritte Antriebssegment anzusteuern, um den Transportträger mit der Bearbeitungsgeschwindigkeit durch den Bearbeitungsbereich zu transportieren. Dies ist besonders dann der Vorteil, wenn die Bearbeitung des Auftrags an einem bewegten Transportträger durchgeführt werden soll. Optional kann das dritte Antriebssegment, wie bereits zuvor ausgeführt, Teil einer Stoppeinheit sein, sodass der Transportträger wahlweise mit der Bearbeitungsgeschwindigkeit durch den Bereitstellabschnitt transportiert oder in diesem angehalten werden kann. Die Bearbeitungsgeschwindigkeit kann beispielsweise einem Stillstand des Transportträgers entsprechen.

Mit Vorteil ist vorgesehen, dass die Anschaltmodule mit einer übergeordneten Steuereinheit verbunden sind.

Bevorzugt unter Ausnützung der zuvor beschriebenen Vorteile und Wirkungen, wird die weitere Aufgabe mit einem Verfahren zum Transport von Hängeware zu oder von einer Arbeitsstation gelöst, wobei die Hängeware an einem Transportträger, insbesondere an einem Transportträger nach einem der zuvor beschriebenen Aspekte, hängend transportiert wird, wobei der Transportträger zum Transport von Hängeware an einer Hängefördervorrichtung ausgebildet ist und zumindest ein Sekundärelement eines Linearmotors aufweist, und wobei die Hängefördervorrichtung zumindest ein Primärelement eines Linearmotors aufweist, umfassend die Schritte:
- Erstellen eines Transportauftrags für die zumindest eine Hängeware;
- Transport der Hängeware an einer Hängefördervorrichtung, insbesondere an einer Hängefördervorrichtung nach einem der Ansprüche 7 bis 13, gemäß dem Transportauftrag zu oder von der Arbeitsstation, wobei
der Transportträger entlang einer Führungsvorrichtung der Hängefördervorrichtung bewegt wird, indem mittels des zumindest einen Primärelementes des Linearmotors eine Antriebskraft erzeugt und über das Sekundärelement des Linearmotors auf den Transportträger übertragen wird, wodurch der Transportträger mit der Antriebskraft beaufschlagt wird, wobei ein Spaltabstand zwischen dem Primärelement und dem Sekundärelement im Wesentlichen konstant gehalten wird.

Bevorzugt unter Ausnützung der zuvor beschriebenen Vorteile und Wirkungen, wird die weitere Aufgabe mit auch einem Verfahren zum Transport von Hängeware an einer Hängefördervorrichtung gelöst, wobei mittels eines stationären Primärelementes eines Linearmotors eine magnetische Antriebskraft erzeugt und über zumindest ein am Transportträger angeordnetes Sekundärelement auf den Transportträger übertragen wird, sodass der Transportträger in einer Bewegungsrichtung entlang der Führungsvorrichtung bewegt wird, wobei ein Spaltabstand zwischen dem Primärelement und dem Sekundärelement im Wesentlichen konstant gehalten wird.

Ein mit dem Verfahren erzielter Vorteil ist insbesondere darin zu sehen, dass die Antriebskraft berührungslos auf den Transportträger übertragen wird, wodurch die Hängefördervorrichtung einerseits geräuscharm betrieben werden kann. Andererseits kann die Hängefördervorrichtung auch nahezu verschleiß- und wartungsfrei betrieben werden, da die Transportträger weder durch Formschluss noch mit Reibschluss angetrieben sind, wie im Stand der Technik bekannt. Indem der Abstand zwischen dem Primärelement und dem Sekundärelement im Wesentlichen konstant gehalten wird, kann eine konstante Antriebskraft gewährleistet werden.

Ein konstant halten des Spaltabstandes zwischen dem Primärelement und dem Sekundärelement ist im Sinne der Erfindung ein lateraler Abstand zwischen einer Seitenfläche des Primärelementes und einer Seitenfläche des Sekundärelementes orthogonal auf diese Seitenflächen zu verstehen.

Beim Transport von Hängeware an einer Hängefördervorrichtung kann es sein, dass die Transportträger eine oder mehrere Streckenabschnitte durchfahren, in welchen kein Primärelement angeordnet ist. Ein Wegbewegen des Transportträgers entlang seiner Bewegungsrichtung von einem ersten Primärelement bzw. ein Annähern des Transportträgers entlang seiner Bewegungsrichtung zu einem zweiten Primärelement ist nicht als Veränderung des Spaltabstandes "zwischen dem Primärelement und dem Sekundärelement" im Sinne der Erfindung anzusehen.

Der Transportträger kann beispielsweise von einem ersten Primärelement mit einer Antriebskraft beaufschlagt und dadurch in Bewegungsrichtung angestoßen bzw. bewegt werden. In der Folge kann sich der Transportträger passiv, also im Wesentlichen antriebslos, durch einen Streckenabschnitt bewegen, in welchem kein Primärelement positioniert ist. Bei Erreichen eines weiteren Streckenabschnittes, in welchem ein zweites Primärelement angeordnet ist, kann der Transportträger von diesem wieder mit einer Antriebskraft beaufschlagt und dadurch weiterbewegt werden.

Weitere Merkmale, Vorteile und Wirkungen ergeben sich aus den nachfolgend dargestellten Ausführungsbeispielen.

Die Ausführungsformen gemäß den Fig. 1 bis 12 sind nicht Teil der Erfindung.

Die Zeichnungen zeigen:
- Fig. 1: einen Ausschnitt einer Hängefördervorrichtung;
- Fig. 2a: eine Seitenansicht eines Transportträgers;
- Fig. 2b: eine perspektivische Ansicht des Transportträgers;
- Fig. 3: eine Querschnittsdarstellung einer Führungsvorrichtung (Führungsprofil);
- Fig. 4: eine stirnseitige Ansicht des Transportträgers samt Führungsvorrichtung;
- Fig. 5: dicht aneinander gereihte Transportträger, beispielweise entlang einer Pufferstrecken;
- Fig. 6: einen Weichenabschnitt der Hängefördervorrichtung;
- Fig. 7: den Weichenabschnitt mit einer elektromagnetischen Schalteinrichtung;
- Fig. 8: den Weichenabschnitt mit einem mechanischen Schaltelement in einer ersten Stellung;
- Fig. 9: den Weichenabschnitt mit dem mechanischen Schaltelement in einer zweiten Stellung;
- Fig. 10: eine Detailansicht des mechanischen Schaltelementes;
- Fig. 11: den Weichenabschnitt mit einem geradeaus geführten Transportträger;
- Fig. 12: den Weichenabschnitt mit einem ausgeschleusten Transportträger;
- Fig. 13: einen Ausschnitt einer Hängefördervorrichtung gemäß der Erfindung;
- Fig. 14a: eine Frontansicht eines Transportträgers der Hängefördervorrichtung gemäß der Erfindung;
- Fig. 14b: eine Frontansicht einer Führungsvorrichtung der Hängefördervorrichtung gemäß der Erfindung;
- Fig. 15: eine Frontansicht des Ausschnitts der Hängefördervorrichtung gemäß der Erfindung;
- Fig. 16: eine schematische Darstellung der Hängefördervorrichtung gemäß der Erfindung;
- Fig. 17: eine schematische Darstellung einer Arbeitsstation.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

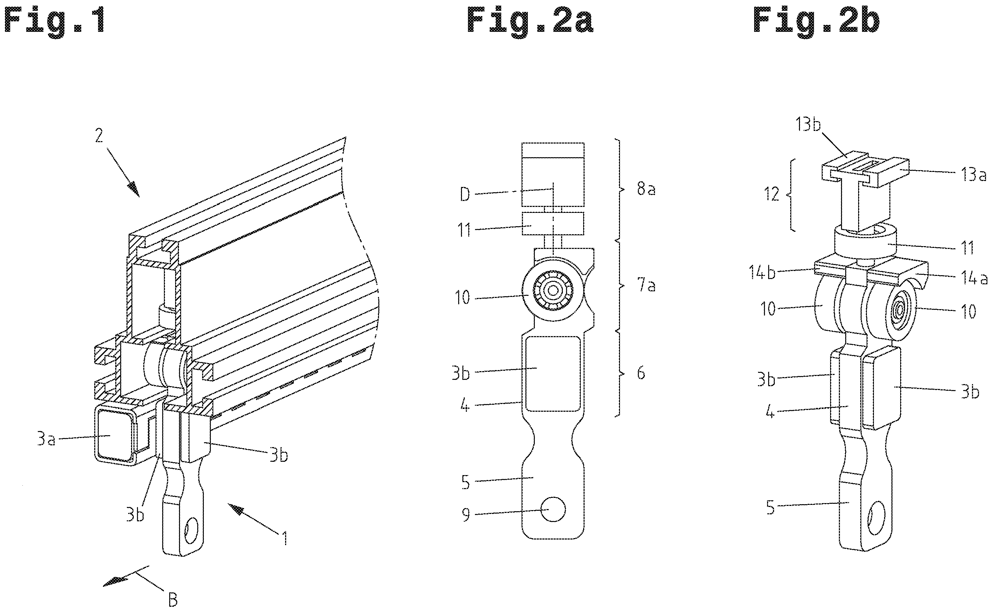

Fig. 1 zeigt einen Ausschnitt einer Hängefördervorrichtung zum Transport von Hängeware. Ein Transportträger 1 ist hierbei entlang einer Führungsvorrichtung bewegbar. Die Führungsvorrichtung umfasst ein Führungsprofil 2, wobei der Transportträger 1 nach dieser Ausführung in einem Innenraum des Führungsprofils 2 geführt ist. Das Führungsprofil 2 ist in Fig. 1 im Querschnitt dargestellt.

Ferner ist eine Antriebsvorrichtung zur Übertragung einer Antriebskraft auf den Transportträger 1 vorgesehen. Die Antriebsvorrichtung weist ein Primärelement 3a eines Linearmotors 3a, 3b auf. Am Transportträger 1 ist zumindest ein Sekundärelement 3b des Linearmotors 3a, 3b angeordnet, welches mit dem Primärelement 3a zusammenwirken kann.

In Fig. 2a und Fig. 2b ist der Transportträger 1 zum Transport von Hängeware in seitlicher bzw. perspektivischer Ansicht gezeigt, umfassend einen Basiskörper 4 und einen Tragkörper 5 zur Aufnahme der Hängeware. Der Basiskörper 4 weist einen Antriebsabschnitt 6, einen Laufrollenabschnitt 7a und einen Stützabschnitt 8a auf. Ferner bildet der Basiskörper 4 einander gegenüberliegende Seitenwände aus, welche in Fig. 2a parallel zur Bildebene ausgerichtet sind.

An einem ersten Ende des Basiskörpers 4 ist der Tragkörper 5 positioniert. Der Tragkörper 5 weist eine Einhängeeinrichtung 9 zur Aufnahme der Hängeware auf. Die Einhängeeinrichtung 9 ist üblicherweise zur Aufnahme eines Hakens, beispielsweise eines Hakens eines Kleiderbügels oder einer Transporttasche, insbesondere als Loch, Öse oder Haken, ausgebildet. Beim gezeigten Ausführungsbeispiel ist der Tragkörper 5 einstückig mit dem Basiskörper 4 ausgebildet. Alternativ kann der Tragkörper 5 über eine Verbindungsvorrichtung auswechselbar am Basiskörper 4 fixiert sein.

Das Sekundärelement 3b ist im Antriebsabschnitt 6 angeordnet und zum Zusammenwirken mit dem Primärelement 3a ausgebildet. Vorzugsweise ist das Sekundärelement 3b als Permanentmagnet ausgebildet. Weiter kann vorgesehen sein, wie nicht näher dargestellt, dass das Sekundärelement 3b einseitig an einer ersten Seitenwand oder einer zweiten Seitenwand der Seitenwände des Basiskörpers 4 angeordnet ist. Üblicherweise ist vorgesehen, dass das Sekundärelement 3b ein erstes Sekundärelement 3b und ein zweites Sekundärelement 3b umfasst. Wie in Figuren dargestellt, ist in der Regel vorgesehen, dass das erste Sekundärelement 3b an der ersten Seitenwand der Seitenwände des Basiskörpers 4 und das zweite Sekundärelement 3b an der zweiten Seitenwand der Seitenwände des Basiskörpers 4 angeordnet ist.

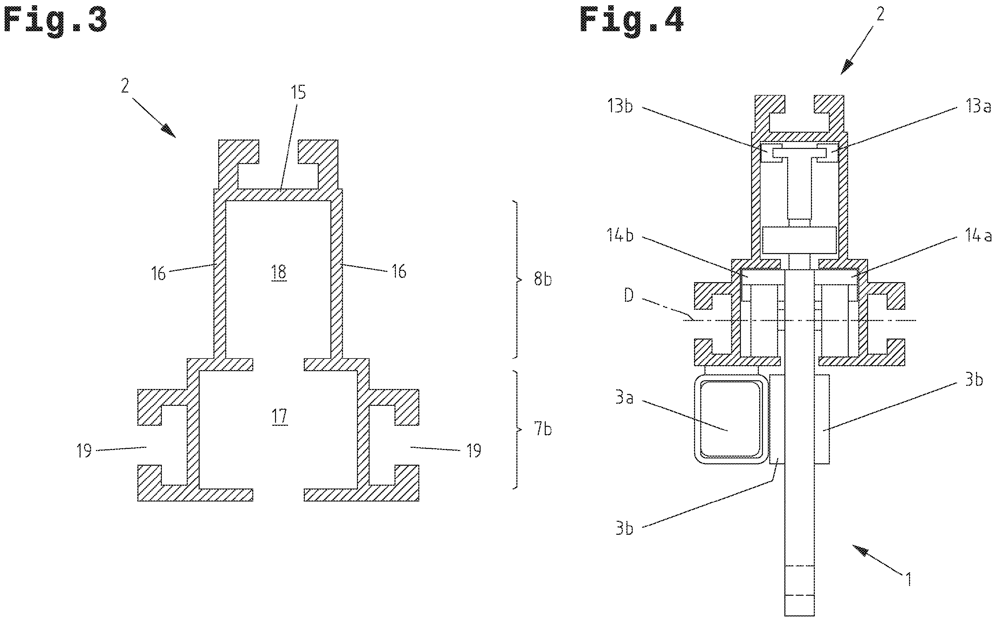

Im Laufrollenabschnitt 7a des Transportträgers 1 ist an den Seitenwänden des Basiskörpers 4 jeweils eine drehbar gelagerte Laufrolle 10 angeordnet. Die Laufrollen 10 weisen eine (in Fig. 4 eingetragene) Drehachse D auf, welche orthogonal zu den Seitenwänden ausgerichtet ist. Durch eine derartige Ausrichtung der Drehachse D ist der Transportträger 1 zur Bewegung in einer Bewegungsrichtung bzw. entgegen der Bewegungsrichtung ausgebildet. Die Bewegungsrichtung (wie ausschließlich in Fig. 1 mit dem Pfeil "B" eingetragen) verläuft hierbei parallel zu den Seitenwänden des Basiskörpers 4. In Fig. 2a sind die Drehachse D orthogonal und die Bewegungsrichtung parallel zur Bildebene ausgerichtet.

Der Transportträger 1 weist weiter eine Stützrolle 11 auf, welche im Stützabschnitt 8a des Transportträgers 1 angeordnet ist. Eine (in Fig. 2a eingetragene) Drehachse D der Stützrolle 11 ist orthogonal zur (in Fig. 4 eingetragene) Drehachse D der Laufrollen 10 ausgerichtet, sodass die Drehachse D der Stützrolle 11 und die Drehachse D der Laufrollen 10 eine Ebene aufspannen, welche orthogonal zu den Seitenwänden des Basiskörpers 4 ausgerichtet ist. Im Wesentlichen ist die (in Fig. 2a eingetragene) Drehachse D der Stützrolle 11 parallel zu einer Längsachse des Basiskörpers 4 ausgerichtet. In der in Fig. 2a gezeigten Darstellung verläuft die Drehachse D parallel zur Bildebene.

Ferner umfasst der Transportträger 1 ein Stützelement 13a, 13b, welches im Stützabschnitt 8a des Transportträgers 1 angeordnet ist. Das Stützelement 13a, 13b umfasst in der dargestellten Ausführungsform einen ersten Stützkörper 13a und einen zweiten Stützkörper 13b, welche an einem dem Tragkörper 5 gegenüberliegenden zweiten Ende des Basiskörpers 4 positioniert sind. Hierfür kann der Basiskörper 4 am oder im Bereich des zweiten Endes seitliche Fortsätze aufweisen, sodass das zweite Ende des Basiskörpers 4 im Wesentlichen T- bzw. kreuzförmig ausgebildet ist. Der Basiskörper 4 weist somit in der Regel einen ersten Fortsatz und einen zweiten Fortsatz auf, welche jeweils orthogonal zu den Seitenwänden des Basiskörpers 4 ausgerichtet sind. Alternativ kann das Stützelement 13a, 13b einstückig ausgebildet sein, sodass dieses das zweite Ende des Basiskörpers 4 umspannt.

Wie in Fig. 2b gezeigt, sind die Stützkörper 13a, 13b vorzugsweise C-förmig ausgebildet und so am Basiskörper 4 fixiert, dass diese die seitlichen Fortsätze umschließen. Die Stützkörper 13a, 13b bzw. das Stützelement 13a, 13b sind so angeordnet, dass diese jeweils mit einer Innenfläche des Führungsprofils 2 zusammenwirken, um eine seitliche Auslenkbewegung des Transportträgers 1 orthogonal zur Bewegungsrichtung bzw. im Wesentlichen orthogonal zu den Seitenwänden des Basiskörpers 4 zu begrenzen.

Darüber hinaus kann der Basiskörper 4 ein weiteres Stützelement 14a, 14b aufweisen, welches im Laufrollenabschnitt 7a des Basiskörpers 4 angeordnet ist. Das weitere Stützelement 14a, 14b umfasst einen ersten weiteren Stützkörper 14a und einen zweiten weiteren Stützkörper 14b. Der erste weitere Stützkörper 14a und der zweite weitere Stützkörper 14b des weiteren Stützelementes 14a, 14b sind so positioniert, dass eine Pendelbewegung in bzw. entgegen der Bewegungsrichtung begrenzt ist. Das weitere Stützelement 14a, 14b stellt im Wesentlichen ein Führungselement bereit, welches mit dem Führungsprofil 2 der Führungsvorrichtung zusammenwirkt, um den Transportträger 1 im Führungsprofil 2 zu führen.

Um den Transportträger 1 zu identifizieren, kann in einem Identifikationsabschnitt 12 ein Identifikationsmittel angeordnet sein. Das Identifikationsmittel ist üblicherweise als RFID-Chip ausgebildet. Der Identifikationsabschnitt 12 ist zumindest teilweise mit dem Stützabschnitt 8a des Transportträgers 1 überlappend angeordnet. Im gezeigten Beispiel liegt der Identifikationsabschnitt 12 vollständig im Stützabschnitt 8a des Transportträgers 1. Zur Aufnahme des Identifikationsmittels kann der Basiskörper 4 am zweiten Ende eine Aufnahmeöffnung, insbesondere einen Aufnahmeschlitz, aufweisen.

Fig. 3 zeigt die Führungsvorrichtung, welche einen Laufrollenabschnitt 7b und einen Stützabschnitt 8b ausbildet.

Konkret kann die Führungsvorrichtung das Führungsprofil 2 umfassen oder das Führungsprofil 2 ausbilden. Das Führungsprofil 2 ist in Querschnittsdarstellung mit einer Basis 15 und zwei von der Basis 15 vorragenden Schenkeln 16. Die Schenkel 16 weisen zwei einander zugewandte Innenflächen und voneinander abgewandte Außenflächen auf. Ferner weist die Basis 15 eine Innenfläche und eine Außenfläche auf, sodass die Schenkel 16 und die Basis 15 den Innenraum des Führungsprofils 2 begrenzen. Im Wesentlichen weist das Führungsprofil 2 einen C-förmigen Querschnitt auf, welcher ein offenes Ende und ein durch die Basis 15 geschlossenes Ende aufweist. Bei der Hängefördervorrichtung ist das Führungsprofil 2 mit dem offenen Ende nach unten bzw. in Richtung eines Bodens, auf welchem die Hängefördervorrichtung angeordnet ist, orientiert eingebaut.

An den Außenflächen der Schenkel 16 und/oder an der Außenfläche der Basis 15 ist zur Befestigung des Führungsprofils 2 und/oder zur Befestigung von Komponenten am Führungsprofil 2 jeweils eine Befestigungsnut 19 angeordnet.

Am offenen Ende des Führungsprofils 2 weisen die Schenkel 16 jeweils einen von der Innenfläche orthogonal vorragenden Vorsprung auf, um Laufflächen für die Laufrollen 10 bereitzustellen. Die Laufrollen 10 liegen abrollbar auf diesen Laufflächen auf, wie insbesondere in Fig. 1 und Fig. 4 ersichtlich ist.

Darüber hinaus können von den Innenflächen der Schenkel 16 vorragende weitere Vorsprünge vorgesehen sein, durch welche der Innenraum des Führungsprofils 2 im Wesentlichen in einen ersten Innenraum 17 und einen zweiten Innenraum 18 unterteilt ist. Der erste Innenraum 17 stellt im Wesentlichen den Laufrollenabschnitt 7b der Führungsvorrichtung dar, welcher mit dem Laufrollenabschnitt 7a des Transportträgers 1 zusammenwirkt. Ferner bildet der zweite Innenraum 18 den Stützabschnitt 8b der Führungsvorrichtung aus, welcher mit dem Stützabschnitt 8a des Transportträgers 1 zusammenwirkt. In einer alternativen Ausführungsform kann vorgesehen sein, dass der Antriebsabschnitt 6 des Basiskörpers 4 im zweiten Innenraum 18 angeordnet ist, sodass der zweite Innenraum 18 optional einen Antriebsabschnitt 6 der Führungsvorrichtung ausbildet.

Das Führungsprofil 2 kann von der Basis 15 in Richtung zum offenen Ende, stufenförmig verbreiternd ausgebildet sein. Somit weist der erste Innenraum 17 im Wesentlichen eine breitere Querschnittsfläche als der zweite Innenraum 18 auf. Dadurch wird einerseits ausreichend Platz für die Laufrollen 10 bereitgestellt. Andererseits kann das Stützelement 13a, 13b kleiner dimensioniert sein, wenn der zweite Innenraum 18 enger ausgebildet ist.

Fig. 4 zeigt den Transportträger 1 in stirnseitiger Ansicht, wobei der Transportträger 1 im Führungsprofil 2 geführt ist. Hierbei ist ein Querschnitt des Führungsprofils 2 dargestellt. Die Drehachse D der Laufrollen 10 verläuft in der gezeigten Darstellung parallel und die Bewegungsrichtung senkrecht zur Bildfläche. Ferner liegen die Laufrollen 10 abrollbar auf den Laufflächen auf, sodass der Transportträger 1 in Bewegungsrichtung entlang des Führungsprofils 2 verfahrbar ist.

Weiter ist in Fig. 4 ersichtlich, dass der Stützabschnitt 8a des Transportträgers 1 und der Stützabschnitt 8b der Führungsvorrichtung zusammenwirken, um eine seitliche Auslenkbewegung des Transportträgers 1 in Richtung orthogonal zur Bewegungsrichtung und/oder zu den Seitenwänden des Basiskörpers 4 zu reduzieren. Hierfür ist das Stützelement 13a, 13b so angeordnet, dass der erste Stützkörper 13a und der zweite Stützkörper 13b jeweils eine Innenfläche der Innenflächen der Schenkel 16 kontaktieren können, um so den Transportträger 1 seitlich zu stützen.

Ferner ist in Fig. 4 gezeigt, dass das weitere Stützelement 14a, 14b im Laufrollenabschnitt 7a des Transportträgers 1 mit dem Laufrollenabschnitt 7b der Führungsvorrichtung zusammenwirkt, um den Transportträger 1 zu stabilisieren und zu führen. Hierfür sind der erste weitere Stützkörper 14a und der zweite weitere Stützkörper 14b so angeordnet, dass diese jeweils einen weiteren Vorsprung der weiteren Vorsprünge kontaktieren können, um eine Auslenk- bzw. Pendelbewegung parallel zur Führungsvorrichtung zu begrenzen. Darüber hinaus sind der erste weitere Stützkörper 14a und der zweite weitere Stützkörper 14b so positioniert, dass diese jeweils eine Innenfläche der Innenflächen der Schenkel 16 kontaktieren können, um eine Auslenkbewegung senkrecht zur Führungsvorrichtung bzw. zur Bewegungsrichtung zu begrenzen.

Das Primärelement 3a ist in der gezeigten Ausführungsform parallel zur Führungsvorrichtung, insbesondere parallel zum Führungsprofil 2, angeordnet und an einem Montageabschnitt befestigt. Nach gezeigter Ausführung ist der Montageabschnitt an der Führungsvorrichtung ausgebildet. Bevorzugt ist das Primärelement 3a an die Schenkel 16 bzw. die Laufflächen angrenzend, angeordnet. Dadurch kann das Primärelement 3a mit dem Sekundärelement 3b oder den Sekundärelementen 3b zusammenwirken, um den Transportträger 1 entlang der Führungsvorrichtung zu bewegen. Eine infolge magnetischer Abstoßung oder Anziehung erzeugte Auslenkbewegung des Transportträgers 1 kann durch ein Zusammenwirken des Stützelementes 13a, 13b und des weiteren Stützelementes 14a, 14b mit den Innenflächen der Schenkel 16 reduziert werden. In der gezeigten Ausführungsform ist das Primärelement 3a außerhalb des Führungsprofils 2 angeordnet.

In einer alternativen nicht dargestellten Ausführungsform ist der Antriebsabschnitt 6 im zweiten Innenraum 18 des Führungsprofils 2 angeordnet, sodass der zweite Innenraum 18 im Wesentlichen einen Antriebsabschnitt 6 der Führungsvorrichtung ausbildet. Hierbei kann das Primärelement 3a ebenfalls im Antriebsabschnitt 6 der Führungsvorrichtung, insbesondere innerhalb des Führungsprofils 2, an einer Außenfläche der Basis 15 oder an einer Außenfläche eines Schenkels 16 der Schenkel 16 angeordnet sein. Bei dieser alternativen Ausführungsform ist der Antriebsabschnitt 6 des Basiskörpers 4 im Wesentlichen am zweiten Ende des Basiskörpers 4 angeordnet. Das Sekundärelement 3b kann beispielsweise an den seitlichen Fortsätzen des Basiskörpers 4, insbesondere analog zum Stützelement 13a, 13b, fixiert sein. Wenn das zweite Ende des Basiskörpers 4 T-förmig ausgebildet ist, können die seitlichen Fortsätze eine gemeinsame Quer- bzw. Tragfläche zum Tragen des Sekundärelementes 3b bereitstellen, welche orthogonal zu den Seitenwänden sowie zur Längsachse des Basiskörpers 4 ausgerichtet ist. Hierbei kann das Sekundärelement 3b an bzw. auf dieser Quer- bzw. Tragfläche positioniert sein.

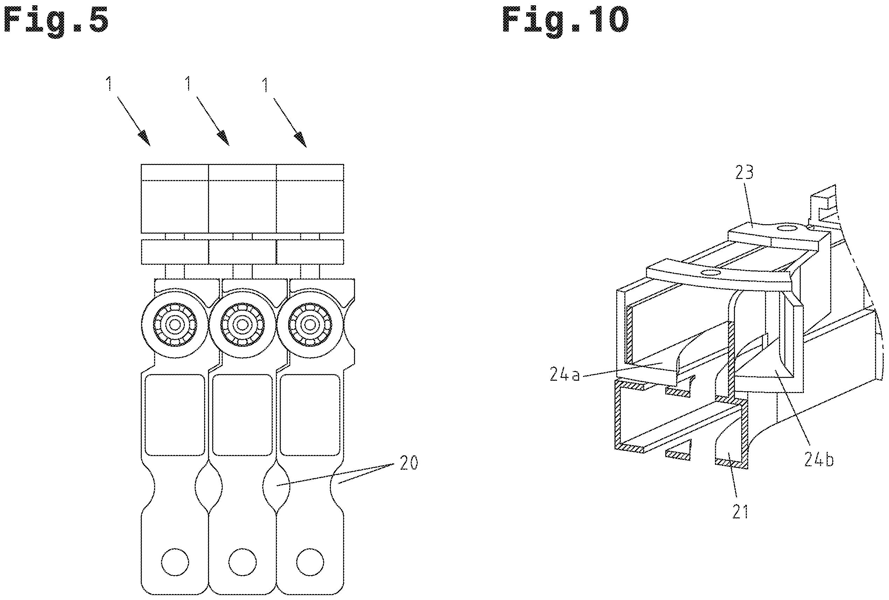

Fig. 5 zeigt in Bewegungsrichtung dicht aneinander gereihte Transportträger 1. Beispielweise können in einem Streckenabschnitt entlang der Führungsvorrichtung, insbesondere in einem Pufferabschnitt, Transportträger 1 angehalten und aufgestaut werden. Es ist auch möglich, dass dicht aneinander gereihte Transportträger 1 als Gruppe gemeinsam bewegt werden. Durch ein gleichzeitiges Bewegen von mehreren dicht aneinander gereihten Transportträgern 1 kann eine Förderleistung, beispielsweise eine Anzahl an gefördertem Stückgut pro Zeiteinheit, erhöht werden, insbesondere wenn eine maximale Fördergeschwindigkeit erreicht ist.

Um die Transportträger 1 wieder voneinander trennen bzw. vereinzeln zu können, weisen der Basiskörper 4 und/oder der Tragkörper 5 der Transportträger 1 vorzugsweise Trennausnehmungen 20 auf, sodass eine Eingriffsaussparung zwischen zwei benachbarten Transportträgern 1 bereitgestellt wird, in welche beispielsweise ein Finger oder Zapfen einer Separationseinrichtung eingreifen kann. Die Trennausnehmungen 20 sind jedoch nicht zwingend erforderlich. Dies kann beispielsweise der Fall sein, wenn die Transportträger 1 in Bewegungsrichtung entlang der Führungsvorrichtung mit gegenseitigem Abstand bewegt werden.

Zum Trennen von mehreren dicht an dicht bewegten Transportträgern 1 kann die Hängefördervorrichtung eine oder mehrere Separationseinrichtungen aufweisen. Eine derartige Separationseinrichtung weist in der Regel zumindest einen Finger oder Zapfen auf, welcher in die Eingriffsaussparung bzw. den Freiraum zwischen zwei Transportträgern 1 eingeführt werden kann, um einen nachfolgenden Transportträger 1 in Bewegungsrichtung zu fixieren, während ein erster Transportträger 1 weiterbewegt wird.

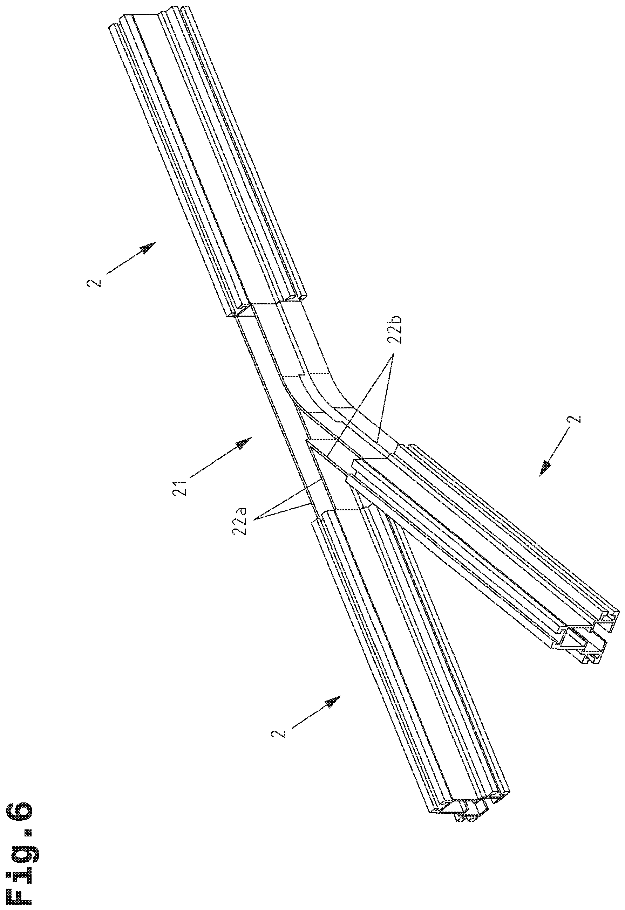

In Fig. 6 ist eine vereinfachte Darstellung eines Weichenabschnittes der Hängefördervorrichtung gezeigt. Im Weichenabschnitt ist vorgesehen, dass sich die Führungsvorrichtung bzw. eine Förderstrecke in eine erste Strecke, üblicherweise eine Hauptstrecke, und eine zweite Strecke, in der Regel eine Ausschleusstrecke, verzweigt. Die Ausschleusstrecke kann beispielsweise als Sortierstrecke, Pufferstrecke (Staustrecke) und dgl. dienen.

Im Weichenabschnitt ist ein im Wesentlichen Y-förmiges Weichenführungsprofil 21 vorgesehen, welches an einem ersten Ende mit einem zuführenden Führungsprofil 2 und an einem verzweigten Ende mit jeweils einem abführenden Führungsprofil 2 verbunden ist. Das Weichenführungsprofil 21 weist in Richtung der ersten Strecke parallel verlaufende Führungswände 22a und in Richtung der zweiten Strecke parallel verlaufende Führungswände 22b auf. Befestigungsnuten 19 sind beim Weichenführungsprofil 21 nicht zwingend erforderlich. Um einen Transportträger 1 der Transportträger 1 wahlweise entlang der ersten Strecke oder der zweiten Strecke zu führen, ist eine Schalteinrichtung vorgesehen.

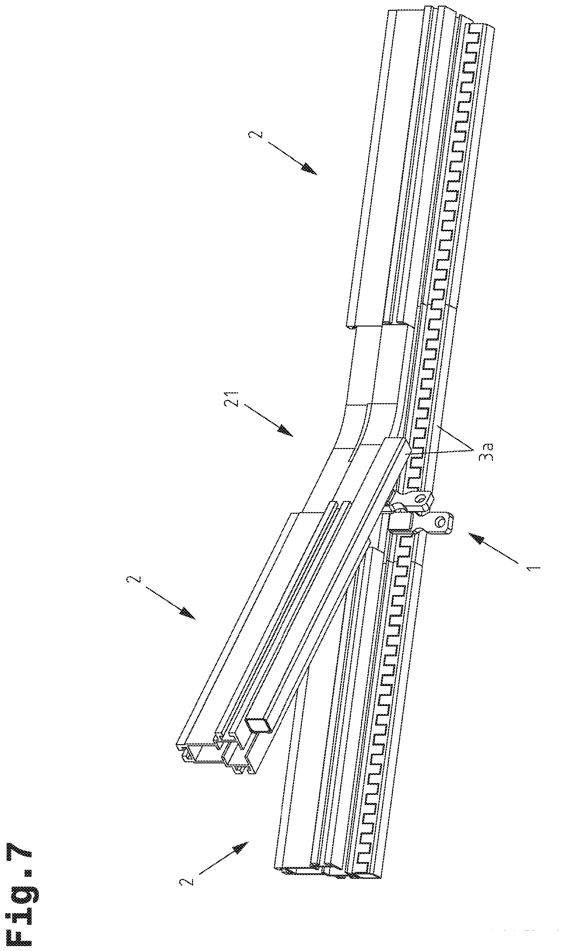

Fig. 7 zeigt den Weichenabschnitt mit einer elektromagnetischen Schalteinrichtung. Hierfür ist entlang der ersten Strecke und entlang der zweiten Strecke jeweils ein Primärelement 3a angeordnet. Die Primärelemente 3a sind individuell ansteuerbar, sodass wahlweise mit dem Primärelement 3a der ersten Strecke und/oder mit dem Primärelement 3a der zweiten Strecke ein Magnetfeld erzeugbar ist, um so den Transportträger 1 auf die erste Strecke oder die zweite Strecke zu leiten. Hierbei sind ein erster Transportträger 1 und ein zweiter Transportträger 1 gezeigt, welche entlang der ersten Strecke bzw. der zweiten Strecke bewegt werden.

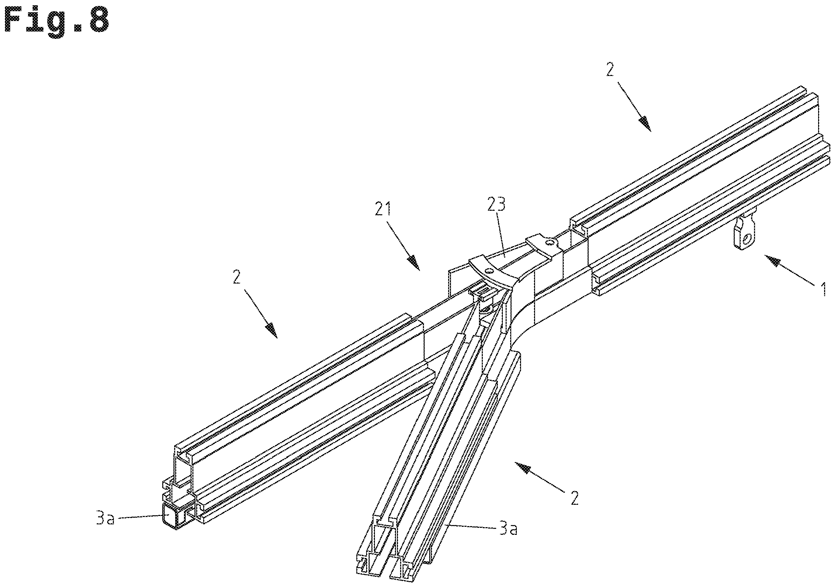

In Fig. 8 bis Fig. 10 ist eine mechanische Schalteinrichtung gezeigt, welche ein mechanisches Schaltelement 23 umfasst. Das mechanische Schaltelement 23 ist beispielsweise mit einer Steuereinrichtung wahlweise in eine erste Stellung bzw. Durchfahrstellung oder eine zweite Stellung bzw. Ausschleusstellung bringbar.

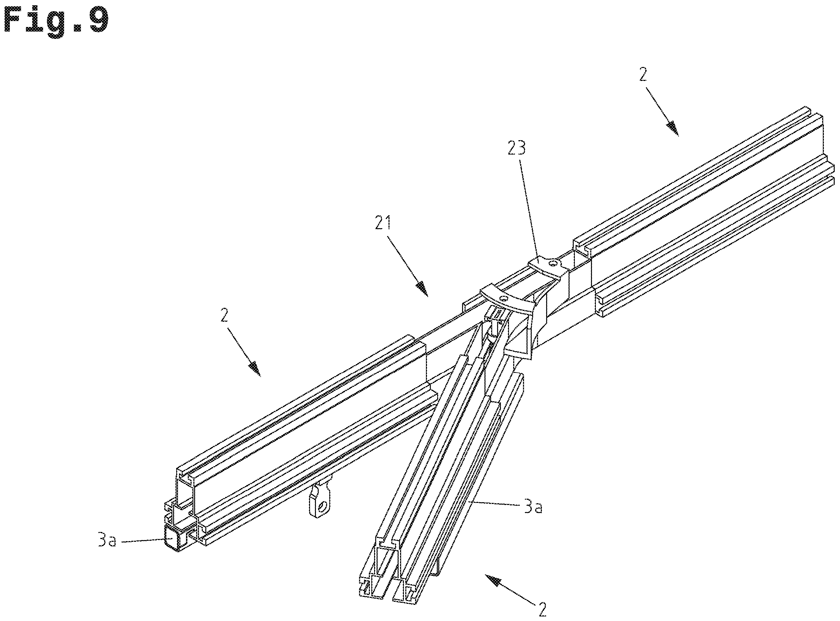

Wie in Fig. 8 dargestellt, ist der Transportträger 1 mit dem mechanischen Schaltelement 23 in der ersten Stellung auf die erste Strecke führbar und mit dem mechanischen Schaltelement 23 in der zweiten Stellung, wie in Fig. 9 dargestellt auf die zweite Strecke führbar. Hierfür ist das mechanische Schaltelement 23 um eine Schwenkachse schwenkbar gelagert.

Auch hierbei kann sowohl entlang der ersten Strecke als auch entlang der zweiten Strecke ein Primärelement 3a angeordnet sein. Diese Primärelemente 3a können ebenfalls individuell ansteuerbar sein, sodass ein Konzept der elektromagnetischen Schalteinrichtung und ein Konzept der mechanischen Schalteinrichtung in einer Schalteinrichtung kombiniert sind.

Eine Detailansicht des mechanischen Schaltelementes 23 in der zweiten Stellung ist in Fig. 10 gezeigt, wobei das Weichenführungsprofil 21 im Querschnitt dargestellt ist. Das mechanische Schaltelement 23 weist Führungskörper 24a, 24b auf, welche so ausgebildet sind, dass die Führungskörper 24a, 24b die Laufrollen 10 in der ersten Stellung in das Führungsprofil 2 der ersten Strecke und in der zweiten Stellung in das Führungsprofil 2 der zweiten Strecke führen. Ein erster Führungskörper 24a der Führungskörper 24a, 24b ist beispielsweise gerade ausgebildet, um den Transportträger 1 geradlinig entlang der ersten Strecke zu führen. Ein zweiter Führungskörper 24b der Führungskörper 24a, 24b ist gekrümmt ausgebildet, um den Transportträger 1 entlang der zweiten Strecke zu führen und den Transportträger 1 so gegebenenfalls auszuschleusen.

Das mechanische Schaltelement 23 und das Weichenführungsprofil 21 sind so ausgebildet, dass wahlweise der erste Führungskörper 24a oder der zweite Führungskörper 24b der Führungskörper 24a, 24b in den Innenraum des Weichenführungsprofils 21 einbringbar ist. Hierfür weist das Weichenführungsprofil 21 seitliche Ausnehmungen auf, welche in den Schenkeln 16 des Weichenführungsprofils 21 angeordnet sind. Durch diese Ausnehmungen können die Führungskörper 24a, 24b in den Innenraum des Weichenführungsprofils 21 eingebracht werden.

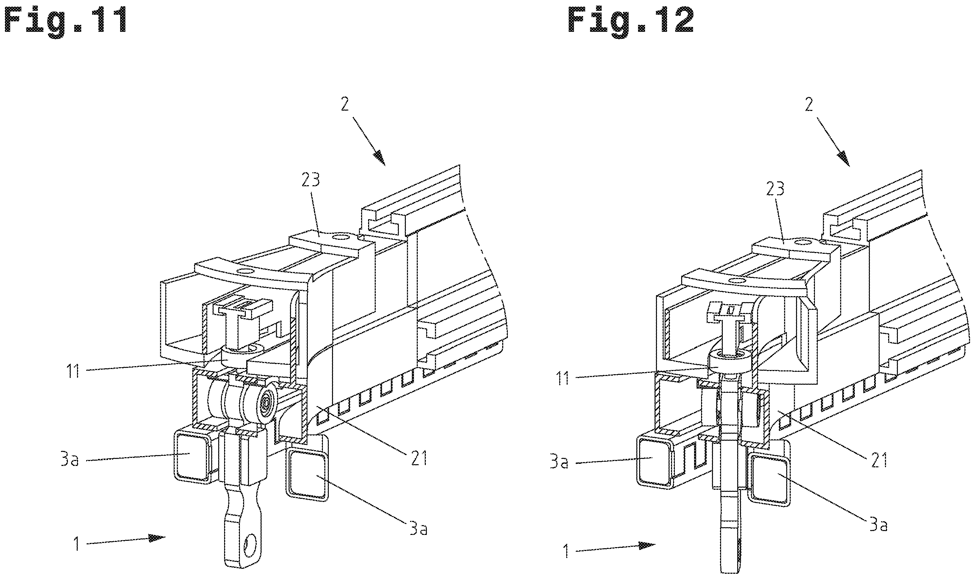

Fig. 11 zeigt einen Transportträger 1, welcher durch das Weichenführungsprofil 21 und das mechanische Schaltelement 23 in der ersten Stellung entlang der ersten Strecke geführt wird. Analog dazu ist in Fig. 12 ein Transportträger 1 gezeigt, welcher durch das Weichenführungsprofil 21 und das mechanische Schaltelement 23 in der zweiten Stellung entlang der zweiten Strecke geführt, beispielsweise ausgeschleust, wird. Das Weichenführungsprofil 21 ist in Fig. 11 und Fig. 12 jeweils in Querschnittsdarstellung gezeigt.

Wie in Fig. 11 und Fig. 12 gezeigt, ist im Weichenabschnitt bereichsweise nur eine Laufrolle 10 der Laufrollen 10 durch eine Lauffläche der Laufflächen gestützt. Hierbei kann der Transportträger 1 ferner durch die Stützrolle 11 geführt sein, welche mit der Innenfläche eines Schenkels 16 der Schenkel 16 zusammenwirkt. Somit ist gewährleistet, dass der Transportträger 1 auch im Weichenabschnitt durch zumindest zwei Rollen 9, 11 geführt ist.

Die in Fig. 7 gezeigte elektromagnetische Schalteinrichtung und eine in Fig. 8 bis 12 gezeigte mechanische Schalteinrichtung können auch zu einer Schalteinrichtung kombiniert bzw. gemeinsam in einem Weichenabschnitt eingesetzt sein, wie dies insbesondere in Fig. 8 und Fig. 9 dargestellt ist.

Bei einem Verfahren zum Transport von Hängeware an einer Hängefördervorrichtung wird ein Transportträger 1 der Transportträger 1, an welchem die Hängeware hängend transportiert wird, mit einer Antriebskraft beaufschlagt und entlang der Führungsvorrichtung, insbesondere dem oben beschriebenen Führungsprofil bewegt. Bei dem Verfahren wird mit dem Primärelement 3a des Linearmotors 3a, 3b ein Magnetfeld, insbesondere ein wanderndes Magnetfeld, erzeugt, wodurch eine Antriebskraft bereitgestellt wird.

Über das Sekundärelement 3b kann diese Antriebskraft auf den Transportträger 1 übertragen bzw. in diesen eingekoppelt werden, sodass dieser in die Bewegungsrichtung entlang der Führungsvorrichtung bewegt wird. Durch das Stützelement 13a, 13b wird eine seitliche Auslenkbewegung begrenzt, sodass der Spaltabstand zwischen dem Primärelement 3a und dem Sekundärelement 3b im Wesentlichen konstant gehalten wird.

Die jeweiligen Transportträger 1 können entlang der Förderstrecke in bestimmten Förderabschnitten identifiziert werden, beispielsweise mittels entsprechender Sensoren oder Lesegeräten an der Hängefördervorrichtung. Gegebenenfalls können die Transportträger 1 dann gezielt an einer Weichenstelle ausgeschleust und entlang der zweiten Strecke geführt werden. Eine Identifikation der Transportträger 1 kann beispielsweise in einer Datenverarbeitungseinrichtung mit einer Produktinformation der jeweilig transportierten Hängeware verknüpft sein.

Um einen Transportträger 1 der Transportträger 1 auszuschleusen bzw. auf die zweite Strecke zu führen, wird das mechanische Schaltelement 23 der Schalteinrichtung von der ersten Stellung in die zweite Stellung gebracht, wodurch der Transportträger 1 auf die zweite Strecke geführt wird. Das mechanische Schaltelement 23 kann danach für nachfolgende Transportträger 1 beispielsweise wieder in die erste Stellung zurückgebracht werden oder für weitere auszuschleusende Transportträger 1 in der zweiten Stellung verweilen.

Alternativ kann ein Transportträger 1 der Transportträger 1 mittels der elektromagnetischen Schalteinrichtung auf die zweite Strecke geführt werden, indem gezielt und individuell jenes Primärelement 3a angesteuert wird, welches im Weichenabschnitt entlang der zweiten Strecke angeordnet ist, sodass mit diesem Primärelement 3a ein Magnetfeld erzeugt wird.

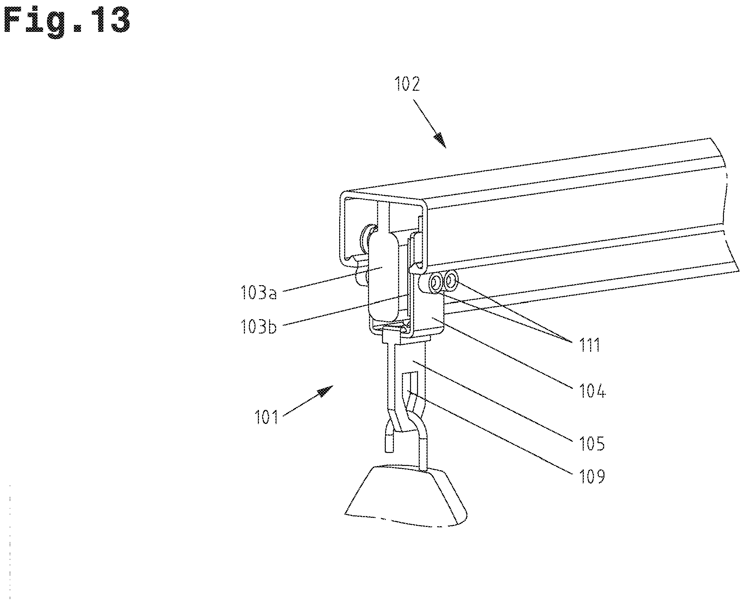

Fig. 13 zeigt einen Ausschnitt einer Ausführung der Hängefördervorrichtung zum Transport von Hängeware gemäß der Erfindung und in einer perspektivischen Ansicht.

Hierbei ist ein Transportträger 101 in einer Transportrichtung entlang einer Führungsvorrichtung bewegbar. Die Führungsvorrichtung umfasst ein Führungsprofil 102, wobei der Transportträger zumindest teilweise in einem Profilinnenraum 117 des Führungsprofils 102 angeordnet und durch das Führungsprofil 102 geführt ist. Die Transportrichtung verläuft in Längsrichtung des Führungsprofils 102.

Der Transportträger 101 ist analog zum Transportträger 1 der ersten Ausführung durch einen Linearmotor angetrieben. Der Linearmotor umfasst ein Primärelement 103a, welches am Führungsprofil 102 angeordnet ist, und ein Sekundärelement 103b, welches am Transportträger 101 angeordnet ist. Um den Transportträger 101 anzutreiben, umfasst die Führungsvorrichtung eine Vielzahl von Primärelementen 103a, welche vorzugsweise zu individuell ansteuerbaren Antriebssegmenten gruppiert sind.

Wie aus Fig. 13 ferner ersichtlich ist, umfasst der Transportträger 101 einen Basiskörper 104, an welchem ein Tragkörper 105 angeordnet ist. Zur Aufnahme einer Hängeware weist der Tragkörper 105 eine Einhängeeinrichtung 109 auf. Die Einhängeeinrichtung 109 ist hierbei als durch den Tragkörper 105 durchreichende Öffnung ausgebildet, in welche ein Haken der Hängeware, beispielsweise ein Haken einer Transporttasche oder ein Kleiderhaken, eingehängt werden kann. Die Einhängeeinrichtung 109 kann selbstverständlich auch anders gestaltet sein, beispielsweise als Haken, Stab, Stift oder dergleichen.

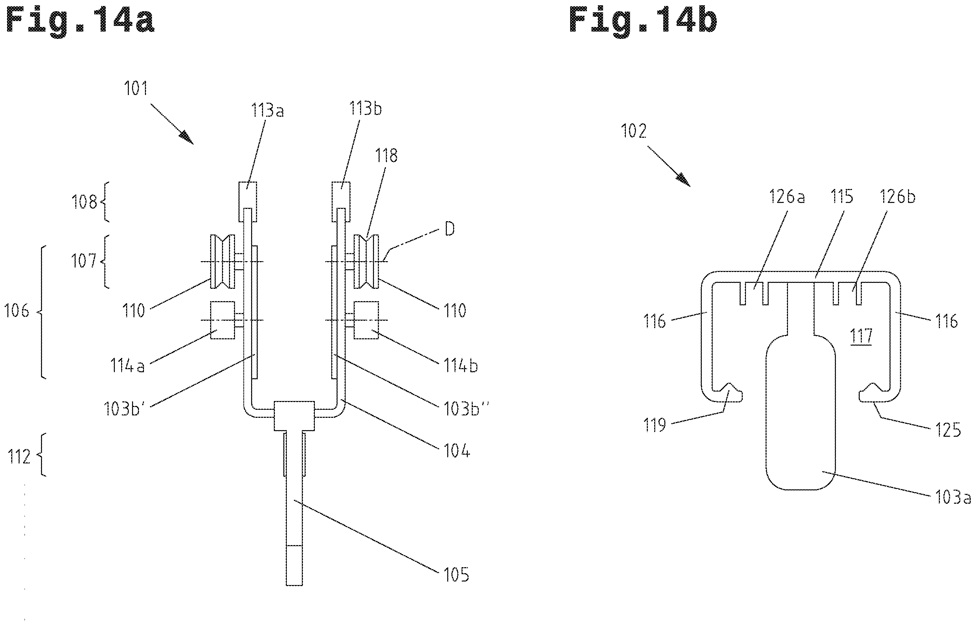

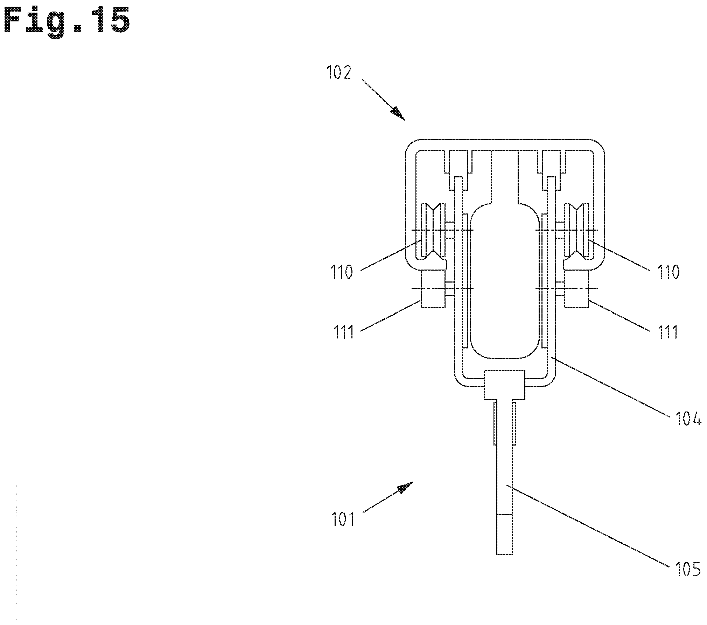

In Fig. 14a und Fig. 14b sind der erfindungsgemäße Transportträger 101 und das Führungsprofil 102 in einer Frontansicht dargestellt. Eine Frontansicht des in Fig. 13 dargestellten Ausschnitts der Hängefördervorrichtung ist in Fig. 15 gezeigt.

Der Transportträger 101 umfasst den Basiskörper 104, welcher zwei gegenüberliegende Seitenwände ausbildet. Die Seitenwände sind an einem Basisende durch eine Basis verbunden, sodass der Basiskörper 104 im Wesentlichen eine U-förmige Struktur bildet bzw. eine U-förmige Querschnittsfläche aufweist.

An der Basis des Basiskörpers 104 ist der Tragkörper 105 angeordnet, welcher zur Aufnahme der Hängeware ausgebildet ist. Der Tragkörper kann unlösbar oder lösbar mit dem Basiskörper 104 verbunden sein. Optional kann der Tragkörper 106 auch einteilig mit dem Basiskörper 105 ausgebildet sein. Der Tragkörper 105 kann im Wesentlichen analog zur ersten Ausführung beschrieben ausgebildet und/oder mit dem Basiskörper 104 verbunden sein.

Der Basiskörper 104 weist einen Antriebsabschnitt 106 auf, in welchem das Sekundärelement 103b angeordnet ist. Der Antriebsabschnitt 106 erstreckt sich über Innenflächen der Seitenwände, sodass das Sekundärelement 103b in einem Transportträgerinnenraum angeordnet ist. Das Sekundärelement 103b umfasst im dargestellten Beispiel ein erstes seitliches Sekundärelement 103b', welches an einer ersten Seitenwand der Seitenwände angeordnet ist, und ein zweites seitliches Sekundärelement 103b", welches an einer zweiten Seitenwand der Seitenwände angeordnet ist. Optional kann das Sekundärelement 103b ein nicht dargestelltes zentrales Sekundärelement aufweisen, welches an der Basis des Basiskörpers 104 angeordnet ist. Das zentrale Sekundärelement kann zusätzlich zum oder anstelle des ersten und zweiten seitlichen Sekundärelementes 103b', 103b" vorgesehen sein.

Ferner weist der Basiskörper 104 einen Laufrollenabschnitt 107 auf, in welchem Laufrollen 110 des Transportträgers 101 angeordnet sind. Die Laufrollen 110 sind außenseitig an den Seitenwänden des Basiskörpers 104 angeordnet und drehbar an diesen gelagert. Wie aus Fig. 13 ersichtlich ist, weist der Transportträger 101 im dargestellten Beispiel ein Laufrollenpaar umfassend zwei Laufrollen 110 mit einer gemeinsamen Drehachse D auf. Optional können ein weiteres Laufrollenpaar oder mehrere weitere derartige Laufrollenpaare vorgesehen sein.

Darüber hinaus weist der Basiskörper 104 eine Seitenführungsvorrichtung auf. Im gezeigten Beispiel umfasst die Seitenführungsvorrichtung ein oberes Stützelement, welches vorzugsweise in einem Stützabschnitt 108 des Basiskörpers 104 angeordnet ist. Das obere Stützelement umfasst einen ersten oberen Stützkörper 113a und einen zweiten oberen Stützkörper 113b, welche mit einer später im Detail beschriebenen Seitenführung des Führungsprofils 102 zusammenwirken können, um den Transportträger entlang der Transportrichtung zu führen.

Der dargestellte Transportträger 101 weist ferner ein Seitenführungselement 118 auf, welches entlang einer Umfangsfläche der Laufrollen ausgebildet ist. Das Seitenführungselement 118 umfasst hierbei jeweils eine Führungsnut, in welche ein in Fig. 14b dargestellter Führungsvorsprung 119 eingreifen kann. Die Führungsnut ist im Wesentlichen mit voneinander divergierenden Seitenflächen ausgebildet, sodass diese im Querschnitt vorzugsweise V- bzw. dreiecksförmig ausgebildet ist.

Überdies weist der Basiskörper ein unteres Stützelement auf, welches bevorzugt in einem alternativen oder zusätzlichen Stützabschnitt des Basiskörpers 104 angeordnet ist. Das untere Stützelement umfasst im gezeigten Beispiel einen ersten unteren Stützkörper 114a und einen zweiten unteren Stützkörper 114b. Der erste untere Stützkörper 114a sowie der zweite untere Stützkörper 114b umfassen im dargestellten Beispiel jeweils zwei Stützrollen 111, wie insbesondere in Fig. 13 ersichtlich ist. Die unteren Stützkörper 114a, 114b können gegebenenfalls auch nur jeweils eine Stützrolle 111 oder jeweils ein oder mehrere Gleitelemente umfassen. Die Wirkungsweise des unteren Stützelementes wird im Zusammenhang mit dem Führungsprofil 102 näher beschrieben.

Der Tragkörper 105 weist einen Identifikationsabschnitt 112 auf, in welchem vorzugsweise ein RFID-Chip oder ein anderes geeignetes Identifikationsmittel angeordnet ist. Ein geeignetes Identifikationsmittel ist jedes Identifikationsmittel, welches zur kontaktlosen Identifikation des Transportträgers 101 geeignet ist, und kann beispielsweise auch als Strichcode oder QR-Code ausgebildet sein.

Das Führungsprofil 102 umfasst eine Basis 115 sowie an der Basis 115 vorragende Schenkel 116. Die Basis 115 und die Schenkel 116 begrenzen einen Profilinnenraum 117 zur Aufnahme des Transportträgers 101. Das Führungsprofil 102 kann auch wie in Fig. 3 dargestellt ausgebildet sein, sodass der Profilinnenraum 117 in einen ersten Innenraum und einen zweiten Innenraum gegliedert werden kann.

Wie aus Fig. 13 und Fig. 14b ersichtlich ist, ist das Primärelement 103a im Profilinnenraum 117 des Führungsprofils 102 angeordnet.

Innenseitig an den Schenkeln 116 des Führungsprofils 102 sind Laufschienen 125 angeordnet, welche jeweils eine Lauffläche für die Laufrollen 110 des Transportträgers bereitstellen.

Das Führungsprofil 102 umfasst ferner eine Seitenführung, welche mit der Seitenführungsvorrichtung des Transportträgers 101 zusammenwirkt.

Hierfür umfasst die Seitenführung eine obere Seitenführung. Die obere Seitenführung umfasst eine erste Führungsnut 126a bzw. Führungsrille und eine zweite Führungsnut 126b bzw. Führungsrille, welche beabstandet und parallel zueinander angeordnet sind und sich entlang des Führungsprofils 102 erstrecken. Die Führungsnuten 126a, 126b sind jeweils so dimensioniert und angeordnet, dass diese die oberen Stützkörper 113a, 113b aufnehmen können. Die oberen Stützkörper 113a, 113b wirken so mit den Führungsnuten 126a, 126b zusammen, dass der Transportträger 101 gegen eine seitliche Auslenkung bzw. ein verdrehen gesichert ist.

Ferner umfasst die Seitenführung eine untere Seitenführung. Die untere Seitenführung umfasst ein zum Seitenführungselement 118 korrespondierendes Führungselement 119, welches mit dem Seitenführungselement 118 zusammenwirken kann. Das Führungselement 119 ist an einer Laufschiene 125 entlang deren Längsrichtung angeordnet. Im gezeigten Beispiel ist das Führungselement 119 als Führungsvorsprung mit aufeinander zulaufenden Seitenflächen ausgebildet, sodass dieser vorzugsweise eine im Wesentlichen V- bzw. dreiecksförmige Querschnittsfläche aufweist. Die Form des Seitenführungselementes 118 und des Führungselementes 119 kann im Wesentlichen beliebig gewählt sein, sofern das Seitenführungselement 118 dazu ausgebildet ist, das Führungselement 119 aufzunehmen. Alternativ kann das Führungselement 119 dazu ausgebildet sein, das Seitenführungselement 118 aufzunehmen. Hierfür kann das Führungselement 119 als Führungsnut und das Seitenführungselement 118 als Führungsvorsprung ausgebildet sein.

Fig. 15 zeigt in einer Frontansicht wie der Transportträger 101 aus Fig. 14a im Führungsprofil 102 aus Fig. 14b geführt ist. In dieser Darstellung ist ersichtlich, dass die Laufschienen 125 sind jeweils zwischen den Laufrollen 110 und den unteren Stützkörpern 114a, 114b geführt sind, sodass der Transportträger 101 stabilisiert wird.

Darüber hinaus ist in Fig. 15 ersichtlich, dass die oberen Stützkörper 113a, 113 b des Transportträgers 101 in die Führungsnuten 126a, 126b des Führungsprofils 102 aufgenommen sind.

Ferner ist in Fig. 15 gezeigt, dass das Führungselement 119 als Führungsvorsprung ausgebildet ist, welcher im Seitenführungselement 118, welches als Vertiefung bzw. Führungsnut ausgebildet ist, aufgenommen ist.

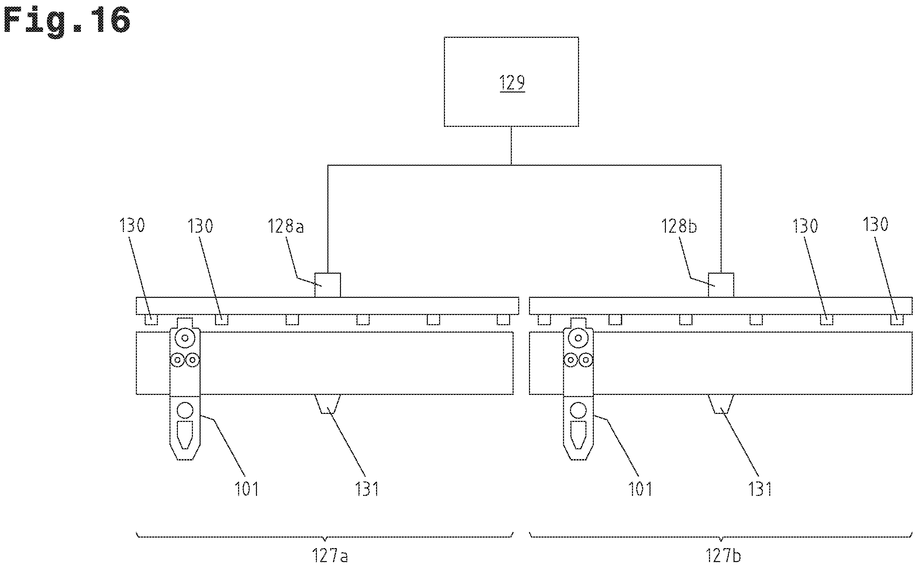

In Fig. 16 ist eine schematische Seitenansicht der Hängefördervorrichtung dargestellt. Hierbei ist vorgesehen, dass die Hängefördervorrichtung entlang des Führungsprofils 102 (in Fig. 16 nicht dargestellt) eine Vielzahl von Antriebssegmenten 127a, 127b umfasst, welche jeweils ein oder mehrere Primärelemente 103a aufweisen. In Fig. 16 sind ein erstes Antriebssegment 127a und ein zweites Antriebssegment 127b dargestellt. Dies entspricht einem Ausschnitt aus einer Hängefördervorrichtung, welche in der Regel mehr als zwei Antriebssegmente 127a, 127b aufweist. Beispielsweise kann ein drittes Antriebssegment vorgesehen sein, welches anschließend an das zweite Antriebssegment 127b oder zwischen dem ersten und zweiten Antriebssegment 127a, 127b angeordnet ist.

Eine Länge der Antriebssegmente 127 a, 127b ist kann für jedes Antriebssegment 127 a, 127b beliebig gewählt sein und weist vorzugsweise eine Mindestlänge von 250 mm auf. Besonders bevorzugt beträgt die Länge eines Antriebssegments 127 a, 127b wenigstens 500 mm und maximal 2000 mm. Vorzugsweise umfassen die Antriebssegmente 127a, 127b jeweils eine Vielzahl von Primärelementen.

Die Hängefördervorrichtung umfasst eine Vielzahl von Anschaltmodulen 128a, 128b, welche einerseits mit einer übergeordneten Steuereinheit 129 verbunden sind und andererseits jeweils einem Antriebssegment 127 a, 127b zugeordnet und mit diesem (elektrisch) verbunden sind. Die Antriebssegmente 127 a, 127b sind somit jeweils über ein Anschaltmodul 128a, 128b mit einer übergeordneten Steuereinheit 129 verbunden. Hierbei ist das erste Antriebssegment 127a über ein erstes Anschaltmodul 128a und das zweite Antriebssegment 127b über ein zweites Anschaltmodul 128b mit der Steuereinheit 129 verbunden. Über die Anschaltmodule 128a, 128b kann somit jedes Antriebssegment 127 a, 127b von der Steuereinheit 129 angesteuert und geregelt werden.

Je kürzer die Länge des Antriebssegments 127 a, 127b gewählt ist, desto flexibler kann die Hängefördervorrichtung betrieben werden. Je länger die Länge des Antriebssegments 127 a, 127b gewählt ist, desto weniger Anschaltmodule 128 sind erforderlich.

Die Steuereinheit 129 ist vorzugsweise dazu ausgebildet, einzelne Antriebssegmente 127 a, 127b individuell ab- bzw. anzuschalten und/oder eine im Antriebssegment 127a, 127b durch das oder die darin angeordneten Primärelemente 103a erzeugte Antriebskraft einzustellen, um den Transportträger 101 im jeweiligen Antriebssegment 127 mit unterschiedlichen Geschwindigkeiten zu transportieren.

Entlang des Führungsprofils 102 sind vorzugsweise eine Vielzahl von Sensoren 130 angeordnet. Die Sensoren 130 sind dazu eingerichtet eine Anwesenheit eines Transportträgers 101 zu erfassen. Hierfür können die Sensoren 130 beispielsweise dazu eingerichtet sein, ein elektrisches Sensorsignal auszugeben, wenn die Anwesenheit eines Transportträgers 101 in einem Erfassungsbereich des jeweiligen Sensors 130 erfasst wird. Der Erfassungsbereich eines Sensors 130 ist jener Bereich, in welchem der Sensor 130 wirksam die Anwesenheit eines Transportträgers 101 erfassen kann. Dieses elektrische Sensorsignal kann an die Steuereinheit 129 übermittelt werden, welche dazu ausgebildet ist, das Sensorsignal auszuwerten. Hierfür ist die Steuereinheit 129 mit den Sensoren 130 verbunden. Die Sensoren 130 können beispielsweise als Hall-Sensoren, Näherungssensoren, optische Sensoren oder dergleichen ausgebildet sein. Vorzugsweise ist vorgesehen, dass in einem, besonders bevorzugt in jedem, Antriebssegment 127a, 128b, jeweils zumindest ein Sensor 130 angeordnet ist.

Es kann vorgesehen sein, dass die Steuereinheit 129 dazu eingerichtet ist, die Sensorsignale für jeden einzelnen Sensor 130 individuell auszuwerten, um die Anwesenheit eines Transportträgers 101 im jeweiligen Erfassungsbereich des Sensors 130 zu erfassen. Alternativ oder zusätzlich kann vorgesehen sein, dass die Steuereinheit 129 dazu eingerichtet ist, die Sensorsignale der Sensoren 130 eines Antriebssegments 127 gesammelt auszuwerten, wobei insbesondere nicht differenziert wird, von welchem Sensor 130 im jeweiligen Antriebssegment 127 das Sensorsignal stammt, um die Anwesenheit eines Transportträgers 101 im jeweiligen Antriebssegment 127 zu erfassen.

Darüber hinaus können entlang des Führungsprofils ein oder mehrere Leseeinheiten 103 zum Erfassen von Identifikationsmitteln der Transportträger 101 angeordnet sein.

Die zur Fig. 16 beschriebenen Komponenten, wie Antriebssegmente 127, Anschaltmodul 128, Steuereinheit 129, Sensoren 130 und/oder Leseeinheit 103, können selbstverständlich in gleicher Art und Weise für sämtliche dargestellten und beschriebenen Ausführungsformen ausgeführt sein.

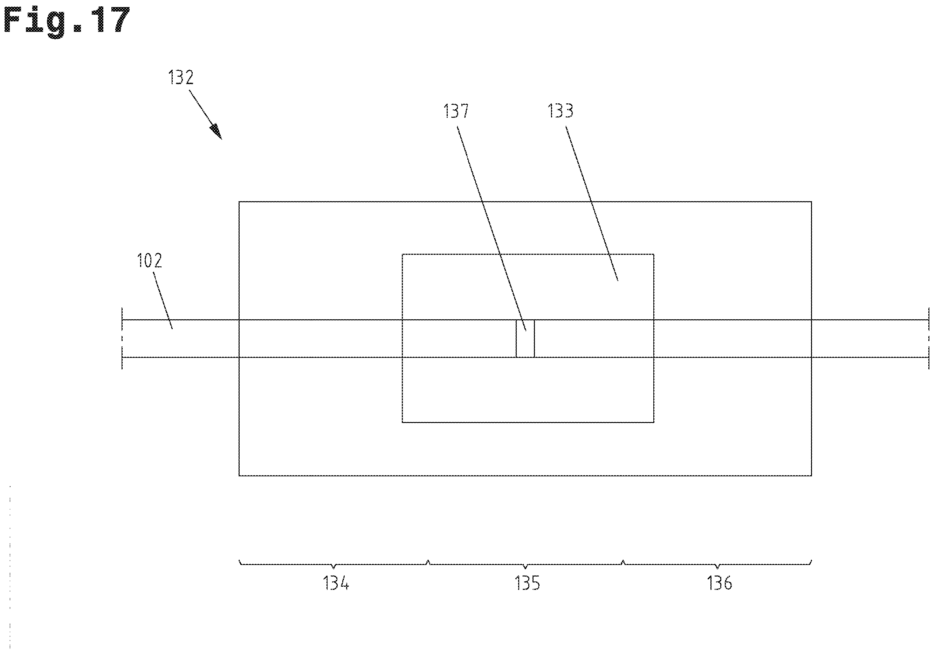

In Fig. 17 ist ein Beispiel für eine Arbeitsstation 132 schematisch dargestellt. Die Arbeitsstation 132 umfasst eine Hängefördervorrichtung mit einem Führungsprofil 102 und ist über die Hängefördervorrichtung fördertechnisch beispielsweise mit anderen Bereichen eines Warenlagers oder eines Fulfillment-Centers verbunden. Die Arbeitsstation 132 kann zur Durchführung von Aufträgen, insbesondere Bearbeitungsaufträgen, ausgebildet sein. Hierfür weist die Arbeitsstation 132 einen Bearbeitungsbereich 133 auf, in welchem die Aufträge bearbeitet werden.

Aufträge können hierbei beispielweise einen Umladeauftrag, bei dem eine am Transportträger 1, 101 hängende Transporttasche mit einer oder mehreren Waren beladen wird, und/oder einen Kommissionierauftrag, bei dem eine oder mehreren Waren von einer am Transportträger 1, 101 hängende Transporttasche entladen werden, umfassen. Es versteht sich, dass die Hängeware auch direkt, also ohne Transporttasche, vom Transportträger 1, 101 transportiert werden kann. In diesem Fall wird beispielsweise zu einem Umladeauftrag eine Ware über einen Kleiderbügel am Transportträger 1, 101 eingehängt und/oder zu einem Kommissionierauftrag eine Ware über einen Kleiderbügel vom Transportträger 1, 101 ausgehängt. Die Aufträge werden an einem elektronischen Auftragsverwaltungssystem datentechnisch erfasst bzw. bearbeitet.

Um Aufträge, insbesondere Bearbeitungsaufträge, an einer Hängeware, beispielweise an einer Transporttasche durchführen zu können, ist es häufig erforderlich, eine Geschwindigkeit des Transportträgers 1, 101 im Vergleich zu einer Transportgeschwindigkeit zu reduzieren oder den Transportträger 1, 101 zu stoppen. Derartige Aufträge können beispielsweise das Beladen oder Entladen von Waren in oder aus Transporttaschen umfassen. Dies erfolgt in der Regel bei einer reduzierten Geschwindigkeit der Transporttaschen oder bei Stillstand der Transporttaschen.

Um eine Reduktion der Geschwindigkeit zu erreichen umfasst die dargestellte Arbeitsstation 132 einen Antransportabschnitt 134 auf, in welchem die Geschwindigkeit des Transportträgers 1, 101 von einer ersten Transportgeschwindigkeit auf eine Bearbeitungsgeschwindigkeit reduziert wird. Hierfür weist die Hängefördervorrichtung ein erstes Antriebssegment 127a auf, welches im Antransportabschnitt 134 angeordnet ist. Das erste Antriebssegment 127a kann wie zuvor beschrieben individuell angesteuert werden, um den Transportträger 1, 101 abzubremsen.

Im Bearbeitungsbereich 133 weist die Arbeitsstation einen Bereitstellabschnitt 135 auf, in welchem die Hängeware für die Bearbeitung des Auftrags bereitgestellt wird. Hierfür kann ein optionales drittes Antriebssegment vorgesehen sein. Der Bereitstellabschnitt kann jedoch auch einen Teil des ersten Antriebssegments 127a umfassen. Um den Transportträger 1, 101 an einem Haltepunkt 137 anzuhalten kann eine Stoppeinheit vorgesehen sein. Die Stoppeinheit ist dazu eingerichtet, den Transportträger 1 101 anzuhalten. Hierfür kann die Stoppeinheit das dritte Antriebssegment umfassen. Alternativ kann die Stoppeinheit als mechanische Stoppeinheit, beispielsweise mit einem Anschlagmodul, ausgebildet sein.

An den Bereitstellabschnitt 135 anschließend ist ein Abtransportabschnitt 136 angeordnet, welcher dazu eingerichtet ist, den Transportträger 1, 101 wieder aus dem Bearbeitungsbereich 133 zu transportieren. Hierfür weist der Abtransportabschnitt 136 ein zweites Antriebssegment 127b auf. Das zweite Antriebssegment 127b ist hierbei dazu eingerichtet, den Transportträger 1, 101 von der Bearbeitungsgeschwindigkeit oder aus dem Stillstand auf eine zweite Transportgeschwindigkeit zu beschleunigen.

Die Hängefördervorrichtung sowie der Transportträger 1, 101 der Arbeitsstation 132 können gemäß einer der beschriebenen Ausführungsformen ausgebildet sein.

Beim Transport des Transportträgers 1, 101 zur Arbeitsstation 132 ist vorgesehen, dass der Transportträger 1, 101 entlang des Führungsprofils 102 transportiert wird. Im Antransportabschnitt 134 wird der Transportträger 1, 101, insbesondere durch das erste Antriebssegment 127a, von der ersten Transportgeschwindigkeit auf die Bearbeitungsgeschwindigkeit abgebremst.

Anschließend wird der Transportträger 1, 101 mit der Bearbeitungsgeschwindigkeit durch den Bereitstellabschnitt 135 transportiert. Gegebenenfalls wird der Transportträger 1, 101 auf eine reduzierte Bearbeitungsgeschwindigkeit reduziert und/oder am Haltepunkt 137 angehalten bzw. gestoppt.

Nach der Bearbeitung des Auftrags, beispielsweise durch eine Bedienperson, einen Roboter oder dergleichen, wird der Transportträger 1, 101 auf die zweite Transportgeschwindigkeit beschleunigt und über den Abtransportabschnitt 136 aus dem Bearbeitungsbereich 133 abtransportiert.

Alternativ kann vorgesehen sein, dass der Transportträger 1, 101 mit der ersten Transportgeschwindigkeit in den Bereitstellabschnitt 135 transportiert und erst in diesem auf die Bearbeitungsgeschwindigkeit abgebremst wird. Ebenso kann vorgesehen sein, dass der Transportträger 1, 101 bereits im Bereitstellabschnitt 135 beschleunigt wird, insbesondere auf die zweite Transportgeschwindigkeit.

Mit dem erfindungsgemäßen Transportträger 101 und dem erfindungsgemäßen Verfahren kann somit ein besonders effizienter und individueller Transport von Hängeware entlang einer Förderstrecke erreicht werden, wobei insbesondere eine Geräuschentwicklung und ein Platzbedarf für entsprechende Hängefördervorrichtungen minimiert werden.

Abschließend wird auch festgehalten, dass der Schutzbereich durch die Patentansprüche bestimmt ist. Die Beschreibung und die Zeichnungen sind jedoch zur Auslegung der Ansprüche heranzuziehen.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

**Bezugszeichenaufstellung**

| | | | |
|---|---|---|---|
| 1, 101 | Transportträger | 126a, 126b | Führungsnut |
| 2, 102 | Führungsprofil | 127a, 127b | Antriebssegment |
| 3a, 103a | Primärelement | 128a, 128b | Anschaltmodul |
| 3b, 103b | Sekundärelement | 129 | Steuereinheit |
| 4, 104 | Basiskörper | 130 | Sensor |
| 5, 105 | Tragkörper | 131 | Leseeinheit |
| 6, 106 | Antriebsabschnitt | 132 | Arbeitsstation |
| 7a, 7b, 107 | Laufrollenabschnitt | 133 | Bearbeitungsbereich |
| 8a, 8b, 108 | Stützabschnitt | 134 | Antransportabschnitt |
| 9, 109 | Einhängeeinrichtung | 135 | Bereitstellabschnitt |
| 10, 110 | Laufrolle | 136 | Abtransportabschnitt |
| 11, 111 | Stützrolle | 137 | Haltepunkt |
| 12, 112 | Identifikationsabschnitt | D | Drehachse |
| 13a, 13b | Stützelement | | |
| 14a, 14b | weiteres Stützelement | | |
| 15, 115 | Basis | | |
| 16, 116 | Schenkel | | |
| 17 | erster Innenraum | | |
| 18 | zweiter Innenraum | | |
| 19 | Befestigungsnut | | |
| 20 | Trennausnehmungen | | |
| 21 | Weichenführungsprofil | | |
| 22a, 22b | Führungswände | | |
| 23 | Schaltelement | | |
| 24a, 24b | Führungskörper | | |
| 113a, 113b | obere Stützkörper | | |
| 114a, 114b | untere Stützkörper | | |
| 117 | Profilinnenraum | | |
| 118 | Seitenführungselement | | |
| 119 | Führungsvorsprung | | |
| 125 | Laufschiene | | |

## Patentansprüche

1. Transportträger (101) zum Transport von Hängeware an einer Hängefördervorrichtung, umfassend
- einen Basiskörper (104), welcher einander gegenüberliegende Seitenwände ausbildet,
- einen Tragkörper (105), welcher zur Aufnahme der Hängeware ausgebildet ist,
- eine Vielzahl von Laufrollen (110), und
- ein Sekundärelement (103b) eines Linearmotors, welches mit einem stationären Primärelement (103a) des Linearmotors zusammenwirken kann, um eine Antriebskraft auf den Transportträger (101) auszuüben,
wobei
- die Seitenwände an einem Basisende über eine Basis verbunden sind, sodass die Seitenwände und die Basis einen Transportträgerinnenraum zur Aufnahme des stationären Primärelementes (103a) des Linearmotors begrenzen, und
- das Sekundärelement (103b) innenseitig am Basiskörper (104) angeordnet ist, **dadurch gekennzeichnet, dass**
die Laufrollen (110) außenseitig angeordnet und drehbar an den Seitenwänden des Basiskörpers (104) gelagert sind.

2. Transportträger (101) nach Anspruch 1, umfassend eine Seitenführungsvorrichtung, welche mit einer Seitenführung eines Führungsprofils (102) der Hängefördervorrichtung zusammenwirken kann, um den Transportträger (101) zu führen.

3. Transportträger (101) nach Anspruch 1 oder 2, **dadurch gekennzeichnet, dass** die Seitenführungsvorrichtung zumindest ein Seitenführungselement (118) aufweist, wobei zumindest eine der Laufrollen (110) und/oder zumindest einer der Stützkörper (114a, 114b) des unteren Stützelementes und/oder zumindest einer der Stützkörper (113a, 113b) des oberen Stützelementes das Seitenführungselement (118) aufweist.

4. Transportträger (101) nach einem der Ansprüche 1 bis 3, **dadurch gekennzeichnet, dass** das Sekundärelement (103b)
- ein erstes seitliches Sekundärelement (103b) aufweist, welches an einer ersten Seitenwand der Seitenwände angeordnet ist, und
- gegebenenfalls ein zweites seitliches Sekundärelement (103b) aufweist, welches an einer zweiten Seitenwand der Seitenwände angeordnet ist.

5. Transportträger (101) nach einem der Ansprüche 1 bis 4, **dadurch gekennzeichnet, dass** der Tragkörper (105) zumindest teilweise aus einem Leichtbaumaterial gefertigt ist.

6. Transportträger (101) nach einem der Ansprüche 1 bis 5, **dadurch gekennzeichnet, dass** ein Identifikationsmittel, insbesondere ein RFID-Chip, am Tragkörper (105) angeordnet ist.

7. Hängefördervorrichtung zum hängenden Transport von Hängeware, mit mehreren Transportträgern (101) nach einem der Ansprüche 1 bis 6, umfassend
- eine Führungsvorrichtung, entlang welcher die Transportträger (101) in einer Transportrichtung bewegbar sind, und
- eine Antriebsvorrichtung, welche zumindest ein Primärelement (103a) eines Linearantriebs aufweist, welches mit dem Sekundärelement (103b) der Transportträger (101) zusammenwirkt, um eine Antriebskraft auf die Transportträger (101) zu übertragen,
**dadurch gekennzeichnet, dass**
die Führungsvorrichtung ein Führungsprofil (102) mit einer Basis (115), an der Basis (115) vorragende Schenkel (116) und Laufschienen (125) umfasst,
wobei die Basis (115) und die Schenkel (116) einen Profilinnenraum (117) zur Aufnahme der Transportträger (101) begrenzen, und
wobei die Laufschienen (125) innenseitig an den Schenkeln (116) angeordnet sind und von diesen vorragen, um eine Lauffläche für die Laufrollen (110) der Transportträger (101) bereitzustellen, und
wobei das Primärelement (103a) im Profilinnenraum (117) zwischen den Schenkeln (116) angeordnet ist.

8. Hängefördervorrichtung nach Anspruch 7, **dadurch gekennzeichnet, dass** das Führungsprofil (102) einen nach unten offenen Profilquerschnitt aufweist und die Laufrollen (110) des Transportträgers (101) im Profilinnenraum (117) geführt sind, wobei der Basiskörper (104) aus dem Führungsprofil (102) ragt, sodass der Tragkörper (105) außerhalb des Führungsprofils (102) angeordnet ist.

9. Hängefördervorrichtung nach Anspruch 7 oder 8, **dadurch gekennzeichnet, dass** das Führungsprofil (102) eine Seitenführung umfasst, welche mit einer Seitenführungsvorrichtung der Transportträger (101) zusammenwirkt.

10. Hängefördervorrichtung nach einem der Ansprüche 7 bis 9, **dadurch gekennzeichnet, dass** der Basiskörper (104) des Transportträgers (101) so angeordnet ist, dass dieser das Primärelement (103a) umgreift.

11. Hängefördervorrichtung nach einem der Ansprüche 7 bis 10, **dadurch gekennzeichnet, dass** die Hängefördervorrichtung eine Steuereinheit (129) zum Ansteuern des zumindest einen Primärelementes (103a) umfasst.

12. Hängefördervorrichtung nach Anspruch 11, **dadurch gekennzeichnet, dass** die Hängefördervorrichtung in Transportrichtung mehrere Antriebssegmente (127a, 127b) umfasst, welche durch die Steuereinheit (129) individuell ansteuerbar sind.

13. Hängefördervorrichtung nach einem der Ansprüche 7 bis 12, **dadurch gekennzeichnet, dass** die Hängefördervorrichtung eine Vielzahl von Sensoren (130) umfasst, welche entlang des Führungsprofils (102) angeordnet und dazu eingerichtet sind, eine Anwesenheit eines Transportträgers (101) zu erfassen.

14. Arbeitsstation (132) zur Bearbeitung von Aufträgen, umfassend
- einen Bearbeitungsbereich (132),
- eine Hängefördervorrichtung, insbesondere eine Hängefördervorrichtung nach einem der Ansprüche 7 bis 13, und
- zumindest einen entlang der Hängefördervorrichtung mittels eines Linearantriebs bewegbaren Transportträger (101) zum Transport von Hängeware nach einem der Ansprüche 1 bis 6,
wobei die Hängefördervorrichtung
- einen Antransportabschnitt (134) zum Antransport des Transportträgers (101) zum Bearbeitungsbereich (132),
- einen an den Antransportabschnitt (134) anschließenden Bereitstellabschnitt (135) zum Bereitstellen des Transportträgers (101) im Bearbeitungsbereich (132), und
- einen an den Bereitstellabschnitt (135) anschließenden Abtransportabschnitt (136) zum Abtransport des Transportträgers (101) vom Bearbeitungsbereich (132),
umfasst,
**dadurch gekennzeichnet, dass**
der Linearantrieb ein erstes Antriebssegment (127a), welches mit einem ersten Anschaltmodul (128a) verbunden ist, und ein zweites Antriebssegment (127b), welches mit einem zweiten Anschaltmodul (128b) verbunden ist, aufweist, welches erstes und zweites Antriebssegment (127a, 127b) individuell ansteuerbar sind, wobei
- das erste Antriebssegment (127a) im Antransportabschnitt (134) angeordnet ist und das erste Anschaltmodul (128a) dazu eingerichtet ist, das erste Antriebssegment (127a) anzusteuern, um den Transportträger (101) von einer ersten Transportgeschwindigkeit auf eine Bearbeitungsgeschwindigkeit zu bringen, und
- das zweite Antriebssegment (127b) im Abtransportabschnitt (136) angeordnet ist und das zweite Anschaltmodul (128b) dazu eingerichtet ist, das zweite Antriebssegment (127b) anzusteuern, um den Transportträger (101) von einer Bearbeitungsgeschwindigkeit auf eine zweite Transportgeschwindigkeit zu bringen.

15. Arbeitsstation (132) nach Anspruch 14, **dadurch gekennzeichnet, dass** im Bereitstellabschnitt (135) eine Stoppeinheit angeordnet ist, welche dazu eingerichtet ist, den Transportträger (101) im Bearbeitungsbereich (132) anzuhalten, das erste Antriebssegment (127a) dazu eingerichtet ist, den Transportträger (101) bis zur Stoppeinheit zu transportieren, und das zweite Antriebssegment (127b) dazu eingerichtet ist, den Transportträger (101) von der Stoppeinheit weg zu transportieren.

16. Arbeitsstation (132) nach Anspruch 14, **dadurch gekennzeichnet, dass** zwischen dem ersten Antriebssegment (127a) und dem zweiten Antriebssegment (127b) ein drittes Antriebssegment im Bereitstellabschnitt (135) angeordnet ist, welches mit einem dritten Anschaltmodul verbunden und individuell ansteuerbar ist, wobei das dritte Anschaltmodul dazu eingerichtet ist, das dritte Antriebssegment anzusteuern, um den Transportträger (101) mit der Bearbeitungsgeschwindigkeit durch den Bearbeitungsbereich (132) zu transportieren.

17. Arbeitsstation (132) nach einem der Ansprüche 14 bis 16, **dadurch gekennzeichnet, dass** die Anschaltmodule mit einer übergeordneten Steuereinheit (129) verbunden sind.

18. Verfahren zum Transport von Hängeware zu oder von einer Arbeitsstation (132), wobei die Hängeware an einem Transportträger (101) nach einem der Ansprüche 1 bis 6 hängend transportiert wird,
wobei der Transportträger (101) zum Transport von Hängeware an einer Hängefördervorrichtung ausgebildet ist und zumindest ein Sekundärelement (103b) eines Linearmotors aufweist, und
wobei die Hängefördervorrichtung zumindest ein Primärelement (103a) eines Linearmotors aufweist,
umfassend die Schritte:
- Erstellen eines Transportauftrags für die zumindest eine Hängeware;
- Transport der Hängeware an einer Hängefördervorrichtung, insbesondere an einer Hängefördervorrichtung nach einem der Ansprüche 7 bis 13, gemäß dem Transportauftrag zu oder von der Arbeitsstation (132), wobei
der Transportträger (101) entlang einer Führungsvorrichtung der Hängefördervorrichtung bewegt wird, indem mittels des zumindest einen Primärelementes (103a) des Linearmotors eine Antriebskraft erzeugt und über das Sekundärelement (103b) des Linearmotors auf den Transportträger (101) übertragen wird, wodurch der Transportträger (101) mit der Antriebskraft beaufschlagt wird, wobei ein Spaltabstand zwischen dem Primärelement (103a) und dem Sekundärelement (103b) im Wesentlichen konstant gehalten wird.

19. Verfahren zum Transport von Hängeware an einer Hängefördervorrichtung, insbesondere an einer Hängefördervorrichtung nach einem der Ansprüche 7 bis 13, bei welchem Transportträger (101) mit einer Antriebskraft beaufschlagt und entlang einer Führungsvorrichtung bewegt werden, wobei die Transportträger (101) jeweils einen Tragkörper (5) umfassen, an welchem die Hängeware hängend transportiert wird, **dadurch gekennzeichnet, dass** mittels eines stationären Primärelementes (3a) eines Linearmotors (3a, 3b) eine magnetische Antriebskraft erzeugt und über zumindest ein am Transportträger (101) angeordnetes Sekundärelement (3b) auf den Transportträger (101) übertragen wird, sodass der Transportträger (101) in einer Bewegungsrichtung entlang der Führungsvorrichtung bewegt wird, wobei ein Spaltabstand zwischen dem Primärelement (3a) und dem Sekundärelement (3b) im Wesentlichen konstant gehalten wird, wobei Transportträger (101) nach einem der Ansprüche 1 bis 6 bewegt werden.

## Claims

1. A transport carrier (101) for transporting a hanging article on an overhead conveying device, comprising
- a base body (104) which forms side walls located opposite one another,
- a supporting body (105) which is formed for receiving the hanging article,
- a plurality of rollers (110), and
- a secondary element (103b) of a linear motor, which secondary element (103b) can cooperate with a stationary primary element (103a) of the linear motor in order to exert a driving force on the transport carrier (101),
wherein
- the side walls are connected at a base end via a base, so that the side walls and the base delimit a transport carrier interior for receiving the stationary primary element (103a) of the linear motor, and
- the secondary element (103b) is arranged on the inner side on the base body (104), **characterized in that**
the rollers (110) are arranged on the outer side and are rotatably mounted on the side walls of the base body (104).

2. The transport carrier (101) according to claim 1, comprising a lateral guide device which can cooperate with a lateral guide of a guide profile (102) of the overhead conveying device to guide the transport carrier (101).

3. The transport carrier (101) according to claim 1 or 2, **characterized in that** the lateral guide device comprises at least one lateral guiding element (118), wherein at least one of the rollers (110) and/or at least one of the support bodies (114a, 114b) of the lower support element and/or at least one of the support bodies (113a, 113b) of the upper support element comprises the lateral guiding element (118).

4. The transport carrier (101) according to one of claims 1 to 3, **characterized in that** the secondary element (103b) comprises
- a first lateral secondary element (103b), which is arranged on a first side wall of the side walls, and
- optionally a second lateral secondary element (103b), which is arranged on a second side wall of the side walls.

5. The transport carrier (101) according to one of claims 1 to 4, **characterized in that** the supporting body (105) is at least partially made of a lightweight material.

6. The transport carrier (101) according to one of claims 1 to 5, **characterized in that** an identifying means, in particular an RFID chip, is arranged on the supporting body (105).

7. An overhead conveying device for the suspended transport of hanging articles, with a plurality of transport carriers (101) according to one of claims 1 to 6, comprising
- a guide device along which the transport carriers (101) are movable in a transport direction, and
- a drive device which has at least one primary element (103a) of a linear drive which cooperates with the secondary element (103b) of the transport carriers (101) in order to transmit a drive force to the transport carriers (101),
**characterized in that**
the guide device comprises a guide profile (102) with a base (115), limbs (116) projecting from the base (115) and running rails (125),
wherein the base (115) and the limbs (116) delimit a profile interior (117) for receiving the transport carriers (101), and
wherein the running rails (125) are arranged on the inside of the limbs (116) and project therefrom in order to provide a running surface for the rollers (110) of the transport carriers (101), and
wherein the primary element (103a) is arranged in the profile interior (117) between the limbs (116).

8. The overhead conveying device according to claim 7, **characterized in that** the guide profile (102) has a downwardly opened profile cross-section and the rollers (110) of the transport carrier (101) are guided in the profile interior (117), the base body (104) projecting from the guide profile (102), so that the carrier body (105) is arranged outside the guide profile (102).

9. The overhead conveying device according to claim 7 or 8, **characterized in that** the guide profile (102) comprises a lateral guide which cooperates with a lateral guide device of the transport carriers (101).

10. The overhead conveying device according to one of claims 7 to 9, **characterized in that** the base body (104) of the transport carrier (101) is arranged to encompass the primary element (103a).

11. The overhead conveying device according to one of claims 7 to 10, **characterized in that** the overhead conveying device comprises a control unit (129) for controlling the at least one primary element (103a).

12. The overhead conveying device according to claim 11, **characterized in that** the overhead conveying device comprises a plurality of drive segments (127a, 127b) in the transport direction, which can be individually controlled by the control unit (129).

13. The overhead conveying device according to one of claims 7 to 12, **characterized in that** the overhead conveying device comprises a plurality of sensors (130) which are arranged along the guide profile (102) and are configured to detect a presence of a transport carrier (101).

14. A workstation (132) for processing orders, comprising
- a processing area (132),
- an overhead conveying device, in particular an overhead conveying device according to one of claims 7 to 13, and
- at least one transport carrier (101) movable along the overhead conveying device by a linear drive for transporting a hanging article according to one of claims 1 to 6, wherein the overhead conveying device comprises
- an inward transport section (134) for transporting the transport carrier (101) to the processing area (132),
- a provisioning section (135) adjoining the inward transport section (134) for providing the transport carrier (101) in the processing area (132), and
- an outward transport section (136) adjoining the provisioning section (135) for transporting the transport carrier (101) away from the processing area (132), **characterized in that**
the linear drive has a first drive segment (127a), which is connected to a first activation module (128a), and a second drive segment (127b), which is connected to a second activation module (128b), the first and second drive segments (127a, 127b) being individually controllable, wherein
- the first drive segment (127a) is arranged in the inward transport section (134) and the first activation module (128a) is configured to activate the first drive segment (127a) in order to bring the transport carrier (101) from a first transport speed to a processing speed, and
- the second drive segment (127b) is arranged in the outward transport section (136) and the second activation module (128b) is configured to activate the second drive segment (127b) in order to bring the transport carrier (101) from a processing speed to a second transport speed.

15. The workstation (132) according to claim 14, **characterized in that** a stop unit is arranged in the provisioning section (135), which stop unit is configured to stop the transport carrier (101) in the processing area (132), the first drive segment (127a) is configured to transport the transport carrier (101) to the stop unit, and the second drive segment (127b) is configured to transport the transport carrier (101) away from the stop unit.

16. The workstation (132) according to claim 14, **characterized in that** a third drive segment is arranged between the first drive segment (127a) and the second drive segment (127b) in the provisioning section (135), which third drive segment is connected to a third activation module and can be controlled individually, wherein the third connection module is configured to activate the third drive segment in order to transport the transport carrier (101) through the processing area (132) at the processing speed.

17. The workstation (132) according to one of claims 14 to 16, **characterized in that** the activation modules are connected to a superordinate control unit (129).

18. A method for transporting a hanging article to or away from a workstation (132),
wherein the hanging article is transported in a suspended manner from a transport carrier (101) according to one of claims 1 to 6,
wherein the transport carrier (101) is configured to transport a hanging article on an overhead conveying device and comprises at least one secondary element (103b) of a linear motor, and
wherein the overhead conveying device has at least one primary element (103a) of a linear motor,
comprising the steps:
- creating a transport order for the at least one hanging article;
- transporting the hanging article on an overhead conveying device, in particular on an overhead conveying device according to one of claims 7 to 13, in accordance with the transport order to or away from the workstation (132), wherein
the transport carrier (101) is moved along a guide device of the overhead conveying device by generating a drive force by the at least one primary element (103a) of the linear motor and transmitting it to the transport carrier (101) via the secondary element (103b) of the linear motor, whereby the transport carrier (101) is acted upon by the drive force, wherein a gap distance between the primary element (103a) and the secondary element (103b) is kept essentially constant.

19. The method for transporting a hanging article on an overhead conveying device, in particular on an overhead conveying device according to one of claims 7 to 13, in which transport carriers (101) are acted upon by a drive force and moved along a guide device, wherein the transport carriers (101) each comprise a supporting body (5) on which the hanging article is transported in a suspended manner, **characterized in that** a magnetic driving force is generated by a stationary primary element (3a) of a linear motor (3a, 3b) and is transmitted to the transport carrier (101) via at least one secondary element (3b) arranged on the transport carrier (101), so that the transport carrier (101) is moved in a direction of movement along the guide device, wherein a gap distance between the primary element (3a) and the secondary element (3b) is kept essentially constant, wherein transport carriers (101) are moved in accordance with one of claims 1 to 6.

## Revendications

1. Support de transport (101) pour le transport de marchandises suspendues sur un dispositif de convoyage de marchandises suspendues comprenant
- un corps de base (104) qui forme des parois latérales qui se font face,
- un corps de support (105) qui est conçu pour le logement des marchandises suspendues,
- une pluralité de galets (110) et
- un élément secondaire (103b) d'un moteur linéaire qui peut interagir avec un élément primaire stationnaire (103a) du moteur linéaire, afin d'exercer une force d'entraînement sur le support de transport (101),
dans lequel
- les parois latérales sont reliées, au niveau d'une extrémité de base, par l'intermédiaire d'une base, de sorte les parois latérales et la base délimitent un espace interne de support de transport pour le logement de l'élément primaire stationnaire (103a) du moteur linéaire et
- l'élément secondaire (103b) est disposé, côté intérieur, sur le corps de base (104), **caractérisé en ce que**
les galets (110) sont disposés côté intérieur et sont logés de manière rotative au niveau des parois latérales du corps de base (104).

2. Support de transport (101) selon la revendication 1, comprenant un dispositif de guidage latéral qui peut interagir avec un guidage latéral d'un profilé de guidage (102) du dispositif de convoyage de marchandises suspendues, afin de guider le support de transport (101).

3. Support de transport (101) selon la revendication 1 ou 2, **caractérisé en ce que** le dispositif de guidage latéral comprend au moins un élément de guidage latéral (118), dans lequel au moins un des galets (110) et/ou au moins un des corps d'appui (114a, 114b) de l'élément d'appui inférieur et/ou au moins un des corps d'appui (113a, 113b) de l'élément d'appui supérieur comprend l'élément de guidage latéral (118).

4. Support de transport (101) selon l'une des revendications 1 à 3, **caractérisé en ce que** l'élément secondaire (103b)
- comprend un premier élément secondaire latéral (103b) qui est disposé sur une première paroi latérale des parois latérales et
- le cas échéant, comprend un deuxième élément secondaire latéral (103b) qui est disposé sur une deuxième paroi latérale des parois latérales.

5. Support de transport (101) selon l'une des revendications 1 à 4, **caractérisé en ce que** le corps de support (105) est constitué au moins partiellement d'un matériau léger.

6. Support de transport (101) selon l'une des revendications 1 à 5, **caractérisé en ce qu'**un moyen d'identification, plus particulièrement une puce RFID, est disposé sur le corps de support (105).

7. Dispositif de convoyage suspendu pour le transport suspendu de marchandises suspendues, avec plusieurs supports de transport (101) selon l'une des revendications 1 à 6, comprenant
- un dispositif de guidage le long duquel les supports de transport (101) peuvent être déplacés dans une direction de transport et
- un dispositif d'entraînement qui comprend au moins un élément primaire (103a) d'un entraînement linéaire qui interagit avec l'élément secondaire (103b) des supports de transport (101), afin d'exercer une force d'entraînement sur les supports de transport (101),
**caractérisé en ce que**
le dispositif de guidage comprend un profilé de guidage (102) avec une base (115), des montants (116) dépassant de la base (115) et des glissières (125),
dans lequel la base (115) et les montants (116) délimitent un espace interne de profilé (117) pour le logement des supports de transport (101) et
dans lequel les glissières (125) sont disposées côté intérieur sur les montants (116) et dépassent de ceux-ci, afin de mettre à disposition une surface de roulement pour les galets (110) des supports de transport (101) et
dans lequel l'élément primaire (103a) est disposé dans l'espace intérieur de profilé (117) entre les montants (116).

8. Dispositif de convoyage suspendu selon la revendication 7, **caractérisé en ce que** le profilé de guidage (102) présente une section transversale de profilé ouverte vers le bas et les galets (110) du support de transport (101) sont guidés dans l'espace interne du profilé (117), dans lequel le corps de base (104) dépasse du profilé de guidage (102), de sorte que le corps de support (105) est disposé à l'extérieur du profilé de guidage (102).

9. Dispositif de convoyage suspendu selon la revendication 7 ou 8, **caractérisé en ce que** le profilé de guidage (102) comprend un guidage latéral qui interagit avec un dispositif de guidage latéral des supports de transport (101).

10. Dispositif de convoyage suspendu selon l'une des revendications 7 à 9, **caractérisé en ce que** le corps de base (104) du support de transport (101) est disposé de sorte que celui-ci entoure l'élément primaire (103a).

11. Dispositif de convoyage suspendu selon l'une des revendications 7 à 10, **caractérisé en ce que** le dispositif de convoyage suspendu comprend une unité de commande (129) pour le contrôle de l'au moins un élément primaire (103a).

12. Dispositif de convoyage suspendu selon la revendication 11, **caractérisé en ce que** le dispositif de convoyage suspendu comprend, dans la direction de transport, plusieurs segments d'entraînements (127a, 127b) qui peuvent être contrôlés individuellement par l'unité de commande (129).

13. Dispositif de convoyage suspendu selon l'une des revendications 7 à 12, **caractérisé en ce que** le dispositif de convoyage suspendu comprend une pluralité de capteurs (130) qui sont disposés le long du profilé de guidage (102) et qui sont conçus pour détecter une présence d'un support de transport (101).

14. Poste de travail (132) pour le traitement de tâches, comprenant
- une zone de traitement (132),
- un dispositif de convoyage suspendu, plus particulièrement un dispositif de convoyage suspendu selon l'une des revendications 7 à 13 et
- au moins un support de transport (101) mobile le long du dispositif de convoyage suspendu au moyen d'un entraînement linéaire, pour le transport de marchandises suspendues selon l'une des revendications 1 à 6,
dans lequel le dispositif de convoyage suspendu comprend
- une portion de transport d'entrée (134) pour le transport d'entrée du support de transport (101) vers la zone de traitement (132),
- une portion de mise à disposition (135) se raccordant à la portion de transport d'entrée (134), pour la mise à disposition du support de transport (101) dans la zone de traitement (132) et
- une portion de transport de sortie (136) se raccordant à la portion de mise à disposition (135), pour le transport de sortie du support de transport (101) hors de la zone de traitement (132),
**caractérisé en ce que**
l'entraînement linéaire comprend un premier segment d'entraînement (127a), qui est relié avec un premier module d'activation (128a), et un deuxième segment d'entraînement (127b), qui est relié avec un deuxième module d'activation (128b), ces premier et deuxième segments d'entraînement (127a, 127b) pouvant être contrôlés individuellement, dans lequel
- le premier segment d'entraînement (127a) est disposé dans la portion de transport d'entrée (134) et le premier module d'activation (128a) est conçu pour contrôler le premier segment d'entraînement (127a), afin d'amener le support de transport (101) d'une première vitesse de transport à une vitesse de traitement et
- le deuxième segment d'entraînement (127b) est disposé dans la portion de transport de sortie (136) et le deuxième module d'activation (128b) est conçu pour contrôler le deuxième segment d'entraînement (127b), afin d'amener le support de transport (101) d'une vitesse de traitement à une deuxième vitesse de transport.

15. Poste de travail (132) selon la revendication 14, **caractérisé en ce que**, dans la portion de mise à disposition (135), est disposée une unité d'arrêt qui est conçu pour arrêter le support de transport (101) dans la zone de traitement (132), le premier segment d'entraînement (127a) est conçu pour transporter le support de transport (101) jusqu'à l'unité d'arrêt et le deuxième segment d'entraînement (127b) est conçu pour transporter le support de transport (101) loin de l'unité d'arrêt.

16. Poste de travail (132) selon la revendication 14, **caractérisé en ce que**, entre le premier segment d'entraînement (127a) et le deuxième segment d'entraînement (127b), est disposé un troisième segment d'entraînement dans la portion de mise à disposition (135), qui est reliée avec un troisième module d'activation et qui peut être contrôlé individuellement, dans lequel le troisième module d'activation est conçu pour contrôler le troisième segment d'entraînement, afin de transporter le support de transport (101) avec la vitesse de traitement à travers la zone de traitement (132).

17. Poste de travail (132) selon l'une des revendications 14 à 16, **caractérisé en ce que** les modules d'activation sont reliés avec une unité de commande prioritaire (129).

18. Procédé de transport de marchandises suspendues vers ou à partir d'un poste de travail (132), dans lequel les marchandises suspendues sont transportées de manière suspendue sur un support de transport (101) selon l'une des revendications 1 à 6,
dans lequel le support de transport (101) est conçu pour le transport de marchandises suspendues sur un dispositif de convoyage suspendu et comprend au moins un élément secondaire (103b) d'un moteur linéaire et
dans lequel le dispositif de convoyage suspendu comprend au moins un élément primaire (103a) d'un moteur linéaire,
comprenant les étapes suivantes :
- création d'une tâche de transport pour au moins une marchandise suspendue ;
- transport de la marchandise suspendue sur un dispositif de convoyage suspendu, plus particulièrement sur un dispositif de convoyage suspendu selon l'une des revendications 7 à 13, conformément à la tâche de transport vers ou à partir du poste de travail (132), dans lequel
le support de transport (101) est déplacé le long d'un dispositif de guidage du dispositif de convoyage suspendu, grâce au fait que, au moyen de l'au moins un élément primaire (103a) du moteur linéaire, une force d'entraînement est générée et est transmise, par l'intermédiaire de l'élément secondaire (103b) du moteur linéaire, au support de transport (101), ce qui soumet le support de transport (101) à la force d'entraînement, dans lequel un interstice entre l'élément primaire (103a) et l'élément secondaire (103b) est maintenu globalement constant.

19. Procédé de transport de marchandises suspendues sur un dispositif de convoyage suspendu, plus particulièrement sur un dispositif de convoyage suspendu à selon l'une des revendications 7 à 13, dans lequel des supports de transport (101) sont soumis à une force d'entraînement et sont déplacés le long d'un dispositif de guidage, dans lequel les supports de transport (101) comprennent chacun un corps de support (5) sur lequel les marchandises suspendues sont transportées de manière suspendue, **caractérisé en ce que**, au moyen d'un élément primaire stationnaire (3a) d'un moteur linéaire (3a, 3b), une force d'entraînement magnétique est générée et est transmise, par l'intermédiaire d'au moins un élément secondaire (3b) disposé sur le support de transport (101), au support de transport (101), de sorte que le support de transport (101) est déplacé dans une direction de déplacement le long du dispositif de guidage, dans lequel un interstice entre l'élément primaire (3a) et l'élément secondaire (3b) est maintenu globalement constant, dans lequel des supports de transport (101) selon l'une des revendications 1 à 6 sont déplacés.
